(19)

Europäisches
Patentamt
European
Patent Office
Office européen
des brevets

(11) **EP 2 693 817 A1**

(12) **EUROPEAN PATENT APPLICATION**
published in accordance with Art. 153(4) EPC

(43) Date of publication:
**05.02.2014 Bulletin 2014/06**

(51) Int Cl.:
***H04W 72/04*** *(2009.01)*

(21) Application number: **11862589.6**

(22) Date of filing: **31.03.2011**

(86) International application number:
**PCT/JP2011/058355**

(87) International publication number:
**WO 2012/132016 (04.10.2012 Gazette 2012/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(71) Applicant: **Fujitsu Limited**
**Kawasaki-shi, Kanagawa 211-8588 (JP)**

(72) Inventors:
• **ODE, Takayoshi**
**Kawasaki-shi**
**Kanagawa 211-8588 (JP)**

• **NAKAMURA, Takaharu**
**Kawasaki-shi**
**Kanagawa 211-8588 (JP)**

(74) Representative: **Ward, James Norman**
**Haseltine Lake LLP**
**Lincoln House, 5th Floor**
**300 High Holborn**
**London WC1V 7JH (GB)**

(54) **COMMUNICATIONS SYSTEM, BASE STATION DEVICE, TERMINAL DEVICE, AND COMMUNICATIONS METHOD**

(57)     A base station apparatus provides one or more cells and performing radio communications with a terminal apparatus, includes a receiving unit receiving the communication conditions from another base station apparatus, the communication conditions being used for a signal processing in radio communications with the terminal apparatus, a transition unit transitioning, when the communication conditions is received from the other base station apparatus, to a coordinated communication mode where the base station and the other base station apparatus perform radio communications with the terminal apparatus, and a radio communication unit performing radio communications with the terminal apparatus using the communication conditions received from the other base station apparatus in the coordinated communication mode.

FIG.1

EP 2 693 817 A1

**Description**

TECHNICAL FIELD

The present invention relates to a communication system, a base station apparatus, a terminal apparatus, and a communication method.

BACKGROUND ART

In recent years, the specifications of a Wideband-Code Division Multiple Access (W-CDMA) system, a Long Term Evolution (LTE) system, and an LTE-advanced system have been discussed in the 3rd Generation Partnership Project (3GPP).

The W-CDMA system is already in service as HSDPA (W-CDMA Release 5) or HSPA (HSDPA+HSUPA W-CDMA Release 6), and its updated version, which is "Release 10", is being discussed by the 3GPP.

Also, the specifications of LTE have been formulated as LTE "Release 8", and the specifications of LTE "Release 9", in which a Multimedia Broadcast Multicast Service (MBMS) function is added, have lately been formulated.

Further, the specifications of the LTE-advanced system, which is an advanced version of the LTE system, are being discussed to be as LTE "Release 10".

Further, the discussions of LTE "Release 11" have already been started. As one of the technologies that are being discussed to be implemented into the LTE "Release 11", there is Coordinated Multi Point transmission and reception (CoMP) (see, for example, TR36.912 V9.3.0 "Feasibility study for further Advancements for E-UTRA (LTE-Advanced) (Release 9)" and TR36.814 V9.0.0 "Further Advancement for E-UTRA Physical Layer Aspects (Release 9)").

Here, as described in, for example, TR36.814 V 9.0.0 "Further Advancement for E-UTRA Physical Layer Aspects (Release 9)", the CoMP is provided for the purposes of Network Multiple Input Multiple Output (MIMO), Spatial Division Multiplex (SDM), Inter Cell Interference Coordination (ICIC) and the like.

Therefore, the implementation of CoMP may vary depending on the purposes. For example, for downlink transmission, Joint Processing (JP), Coordinate Scheduling/Coordinate Beamforming (CS/CB) and the like are being discussed. Meanwhile, for uplink transmission, Joint Reception (JR) and Coordinate Scheduling (CS) and the like are being discussed.

The LTE-Advanced system is intended to expand the LTE system. Therefore, the LTE-Advanced system needs to have compatibility with the LTE system. Namely, some of the LTE-system specifications are continuously used in the LTE-Advanced system.

Especially, if the specifications for baseband signal processing (so called "Channel coding") are changed, configuration of an apparatus (hardware) may have to be totally changed. Therefore, compatibility with the LTE system is desired. Namely, it is desired that the specifications of the baseband signal processing in the LTE-Advanced system is the same as or is based on that in the LTE system.

For downlink data transmissions of the LTE system and LTE-Advanced system, a Physical Downlink Shared Channel (PDSCH) and a Physical Multicast Channel (PMCH) are used, as radio channels, (see, for example, TS36.211 V9.1.0 "Physical Channel and Modulation (Release 9)").

For example, the signal processing in downlink transmissions are performed in accordance with the LTE specifications. Specifically, first, transmission data (bit) are scrambled. Further, the scrambled data (bit) are mapped in accordance with a modulation method to form symbols. For example, in the case of QPSK, 2-bit data are mapped to I and Q channels to form one symbol. Here, a communication technology using scrambling already exists (see, for example, Japanese Laid-open Patent Publication Nos. 2006-311475 and 2008-092379).

Further, a plurality of sets of data (e.g., symbols mapped to the I and Q channels) are mapped to the respective layers (i.e., MIMO streams). Further, in case of MIMO, a Precoding Matrix is multiplied to a plurality of PDSCH symbols. Further, the symbols are mapped to a radio channel PhyCH (e.g., PDSCH or PMCH). Finally, the symbols are converted into an OFDM signal.

Meanwhile, for Coordinated Multi Point (CoMP) transmission using PDSCH, there exists a technology where when scrambling is performed using different scrambling codes among base station apparatuses, a terminal receiving the scrambled data descrambles the scrambled data using the different scrambling codes (see, for example, International Publication Pamphlet Nos. 2010/146617 and 2011/001458). Here, the term "descramble" refers to restore data by converting the scrambled data.

Further, there are known techniques in which, in a radio communication system, one transmitter transmits data to a plurality of receivers and a collective coding is performed for a plurality of base stations (see, for example, Japanese National Publication of International Patent Application Nos. 2004-531945 and 2009-516936).

Patent Document 1: Japanese Laid-open Patent Publication No. 2006-311475.

Patent Document 2: Japanese Laid-open Patent Publication No. 2008-092379.
Patent Document 3: International Publication Pamphlet No. 2010/146617.
Patent Document 4: International Publication Pamphlet No 2011/001458.
Patent Document 5: Japanese National Publication of International Patent Application No. 2004-531945.
Patent Document 6: Japanese National Publication of International Patent Application No 2009-516936.
Non-Patent Document 1: TR36.912 V9.3.0 "Feasibility study for further Advancements for E-UTRA (LTE-Advanced) (Release 9)".
Non-Patent Document 2: TR36.814 V9.0.0 "Further Advancements for E-UTRA Physical Layer Aspects (Release 9)".
Non-Patent Document 3: TS36.211 V9.1.0 "Physical Channel and Modulation (Release 9)".

SUMMARY OF THE INVENTION

PROBLEM TO BE SOLVED BY THE INVENTION

In a case where the CoMP transmission is performed from different cells to a terminal, the initial values of scrambling codes may be different from each other. That is, because the values of a cell number (which is separately set to cells), a physical cell ID, and a slot number (which may not be the same among cells regardless of the same setting range) vary depending on the cells, the initial values of the scrambling codes become different from each other among the cells. Accordingly, the scrambling codes may differ depending on the cells. Namely, in the signal processing of the CoMP transmissions, different scrambling may be performed among the cells.

Thus, terminals and base stations need to generate different scrambling codes and perform signal processing (i.e., scrambling and descrambling) using those scrambling codes. As a result, the control and processing may become complicated.

In the above description, a case of downlink CoMP is described. Meanwhile, in uplink CoMP transmission (e.g., when one terminal transmits data to a plurality of cells), it is necessary to generate a plurality of scrambling codes using the cell IDs of the cells, a terminal number, and the slot number to perform scrambling.

However, the related-art technologies do not provide methods for solving the problem(s) described above. Therefore, for example, when a terminal receives scrambled data in the CoMP transmission using PDSCH, the terminal may have to use different scrambling codes to descramble the received scrambled data. As a result, the descrambling process may become complicated and the processing time may become longer.

The present application is made to resolve at least one of the problems described above and may provide a terminal apparatus, a base station apparatus, a communication system including the terminal apparatus and the base station apparatus, and a communication method capable of reducing the processing workload in the terminal apparatus and the base station apparatus.

MEANS FOR SOLVING THE PROBLEM

According to an aspect of the present application, a communication system includes a terminal apparatus; and primary and secondary base station apparatuses each providing one or more cells.

The primary base station apparatus includes a transmission unit transmitting communication conditions to the secondary base station apparatus, the communication conditions being used for signal transmission and reception processing in a coordinated communication mode where the primary and secondary base station apparatuses perform radio communications with the terminal apparatus in coordination with each other, and a radio communication unit performing radio communications with the terminal apparatus using the communication conditions in the coordinated communication mode.

The secondary base station apparatus includes a receiving unit receiving the communication conditions from the primary base station apparatus, a transition unit transitioning, when the communication conditions are received from the primary base station apparatus, into the coordinated communication mode, and a radio communication unit performing radio communications with the terminal apparatus using the communication conditions received from the primary base station apparatus in the coordinated communication mode.

BRIEF DESCRIPTION OF DRAWINGS

FIG. 1 illustrates an example configuration of a radio communication system according to a first embodiment;
FIG. 2 illustrates an example block diagram of a master base station according to the first embodiment;
FIG. 3 is an example block diagram of a slave base station according to the first embodiment;

FIG. 4 is an example block diagram of a terminal according to the first embodiment;

FIG. 5 is an example block diagram of a terminal according to a first modified example of the first embodiment;

FIG. 6 is an example configuration of a scrambling code forming unit;

FIG. 7 is an example sequence diagram of a communication process according to the first embodiment;

FIG. 8 is an example sequence diagram of a communication process according to a first modified example of the first embodiment;

FIG. 9 is an example sequence diagram of a communication process according to a second modified example of the first embodiment;

FIG. 10 is an example sequence diagram of a communication process according to a third modified example of the first embodiment;

FIG. 11 is an example sequence diagram of a communication process according to a fourth modified example of the first embodiment;

FIG. 12 is an example sequence diagram of a communication process according to a fifth modified example of the first embodiment;

FIG. 13 illustrates an example configuration of a radio communication system according to a fifth embodiment;

FIG. 14 illustrates an example block diagram of a master base station according to the fifth embodiment;

FIG. 15 is an example sequence diagram of a communication process according to the fifth embodiment;

FIG. 16 is an example sequence diagram of a communication process according to a first modified example of the fifth embodiment;

FIG. 17 is an example sequence diagram of a communication process according to a second modified example of the fifth embodiment;

FIG. 18 is an example sequence diagram of a communication process according to a third modified example of the fifth embodiment;

FIG. 19 illustrates an example block diagram of a master base station according to a sixth embodiment;

FIG. 20 is an example block diagram of a slave base station according to the sixth embodiment;

FIG. 21 is an example block diagram of a terminal according to the sixth embodiment;

FIG. 22 is an example sequence diagram of a communication process according to the sixth embodiment;

FIG. 23 is an example sequence diagram of a communication process according to a first modified example of the sixth embodiment;

FIG. 24 is an example sequence diagram of a communication process according to a second modified example of the sixth embodiment;

FIG. 25 illustrates an example block diagram of a master base station according to a seventh embodiment;

FIG. 26 illustrates an example block diagram of a master base station according to a first modified example of the seventh embodiment;

FIG. 27 is an example block diagram of a terminal according to the seventh embodiment;

FIG. 28 is an example sequence diagram of a communication process according to the seventh embodiment;

FIG. 29 is an example sequence diagram of a communication process according to a first modified example of the seventh embodiment;

FIG. 30 is an example sequence diagram of a communication process according to a second modified example of the seventh embodiment;

FIG. 31 is an example sequence diagram of a communication process according to a third modified example of the seventh embodiment;

FIG. 32 is an example sequence diagram of a communication process according to an eighth embodiment;

FIG. 33 is an example sequence diagram of a communication process according to a first modified example of the eighth embodiment;

FIG. 34 is an example sequence diagram of a communication process according to a twelfth embodiment; and

FIG. 35 is an example sequence diagram of a communication process according to a first modified example of the twelfth embodiment.

BEST MODE FOR CARRYING OUT THE INVENTION

In the following, embodiments of the present invention are described with reference to the accompanying drawings.

First embodiment

Configuration of radio communication system

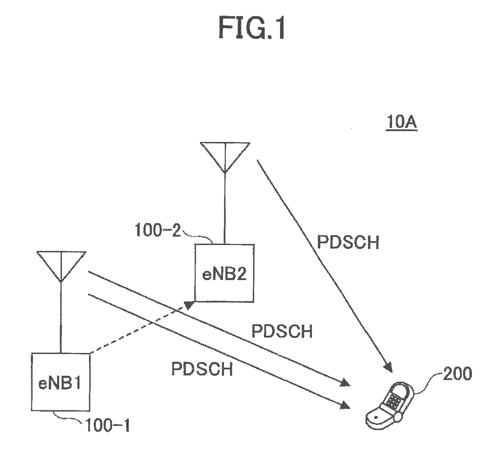

FIG. 1 illustrates an example configuration of a radio communication system according to a first embodiment. As illustrated in FIG. 1, a radio communication system 10A includes two base station apparatus (a.k.a. "eNB": evolved Node B, hereinafter may be simplified as a "base station") 100-1 and 100-2 and a terminal apparatus (a.k.a. "UE": User Equipment, hereinafter may be simplified as a "terminal") 200.

The base stations 100-1 and 100-2 transmit respective data different from each other, and the terminal 200 receives the different data (in downlink). Further, the terminal 200 may transmit data to the base stations 100-1 and another data to the base station 100-2 (in uplink). The base stations 100-1 and 100-2 and the terminal 200 may perform the so-called CoMP communications.

Further, the CoMP communication where base stations performs radio communication with a terminal apparatus in coordination with each other may be called "coordinated communication", and an operational mode of the "coordinated communication" may be called a "coordinated communication mode".

More specifically, FIG. 1 illustrates an example configuration of the radio communication system 10A in downlink. Here, among of the base stations 100-1 and 100-2, the base station 100-1 is a master base station (a.k.a. a main base station, serving base station, primary base station, and Serving cell), and the other base station 100-2 is a slave base station (a.k.a. a dependent base station, non-serving base station, secondary base station, and Non-serving cell)

The master base station 100-1 is connected to the terminal 200 before, for example, the CoMP transmission is performed. The slave base station 100-2 performs, for example, the CoMP transmission. The master base station 100-1 transmits a control signal to the terminal 200.

Based on the received control signal, the terminal 200 receives first and second transmission data (DSCH) from the master base station 100-1 and the slave base station 100-2, respectively, the first transmission data being different from the second transmission data.

First embodiment

Next, the first embodiment is described. In the first embodiment, it is assumed that, for example, one terminal (UE) is connected to a cell (e.g., "cell 1") and receives a notice (instructions) to use , for example, a Radio Network Temporary Identifier (hereinafter "RNTI") or a C-RNTI afterward, so that the terminal uses the RNTI.

In this state, in this embodiment, for example, it is assumed that the terminal 200 may communicate with a cell (e.g., cell 2) as well based on radio channel quality (e.g., received quality, received electric field intensity). In this case, a CoMP transmission request is issued by the terminal or the base station. When it is determined that it is possible to perform the CoMP communications, the base station of the "cell 1" which is originally in connection with the terminal newly issues a CoMP-RNTI (i.e., terminal identification data for CoMP transmission) which is the RNTI for CoMP transmission. Here, it is noted that the newly issued CoMP-RNTI is different from the RNTI that has been issued already. Namely, in this first embodiment, a plurality of base stations set the terminal identification data to the terminal. Here, the terminal identification data is used only when data are simultaneously transmitted or data are sequentially transmitted by switching the timings

When receiving the CoMP-RNTI, the terminal uses the CoMP-RNTI for the CoMP transmission. In this case, the terminal may not use the RNTI having been used before by storing or destroying the RNTI. In a case where the CoMP transmission is not possible and normal data transmission is possible, if the RNTI is stored, the RNTI having been stored may be used again, and if the RNTI is already destroyed, a new RNTI issued by a previous base station (eNB1) or another base station (eNBn) may be used.

Further, in this case, system information (e.g., cell ID, slot number, and CoMP-RNTI) of the cell 1 are notified to the base station (e.g., slave base station (eNB2)) of the cell 2.

Here, the CoMP-RNTI is selected from a plurality of CoMP-RNTIs that have been set by, for example, the base station. The plurality of CoMP-RNTIs may be the same or different in the same radio communication system or radio network, or among operators providing radio communication services, base stations or the like.

The master base station calculate an initial value $c_{init}$ of the scrambling code based on the CoMP-RNTI ($n_{CoMP\text{-}RNTI}$), cell ID ($N_{ID}^{cell}$), and slot number ($n_s$) using the following formula (1).

Further, here, the initial value $c_{init}$ of the scrambling code may also be called a "communication condition(s)".

$$c_{init} = n_{CoMP\text{-}RNTI} \cdot 2^{14} + q \cdot 2^{13} + \lfloor n_s / 2 \rfloor \cdot 2^9 + N_{ID}^{cell} \quad \cdot \cdot \cdot \ (1)$$

Where, the symbol "q" is a constant.

Further, base on the initial value calculated using the above formula (1), the scrambling code is generated based on the following formula (2).

$$c(n) = \left(x_1(n+N_C) + x_2(n+N_C)\right)\bmod 2$$
$$x_1(n+31) = \left(x_1(n+3) + x_1(n)\right)\bmod 2 \qquad \cdots (2)$$
$$x_2(n+31) = \left(x_2(n+3) + x_2(n+2) + x_2(n+1) + x_2(n)\right)\bmod 2$$

Further, the scrambling is performed on the transmission data b(0), ... , b ($M_{bit}$-1) using the generated scrambling code based on the following formula (3) to obtain

$$\widetilde{b}(i)$$

$$\widetilde{b}(i) = \left(b(i) + c(i)\right)\bmod 2 \qquad \cdots (3)$$

Similarly, the slave base station of the cell 2, which receives the CoMP-RNTI or the like, performs scrambling on the data to be transmitted to the terminal base on the received CoMP-RNTI or the like and transmits the scrambled data to the terminal.

Further, in the first embodiment, the master base station and slave base station may simultaneously transmit first and second data, respectively, the first data being different from the second data. Also, either the master base station or the slave base station may transmit the same or different data in different timings determined by switching or the like (it should be noted that the description in this paragraph may also be applied to the other cases described below).

The terminal, which receives the data, calculates the initial value of the scrambling code based on the system information (e.g., CoMP-RNTI and the like) notified from the master base station, and generates the scrambling code.

Further, by descrambling based on the above formula (3), the terminal restores (reproduces) the transmission data.

As described above, when the same data (i.e., CoMP-RNTI, (Physical) Cell ID, and slot number) which are desired for generating the scrambling code are set among the base stations, it may become possible to generate only one scrambling code. Therefore, the processing workload in the terminal may be reduced.

In the above description, a case of the downlink communications is exemplarily described. However, the present invention is not limited to the downlink communications. Namely, the present invention may also be applied to, for example, the scrambling performed on the uplink data in the terminal.

Further, before the above operation is performed, whether the CoMP-RNTI transmission is possible or note may be determined.

Here, an example is described. For example, before the CoMP transmission is performed, a case is considered where the CoMP control is performed so that the CoMP transmission is performed under the conditions that the terminal is connected to the base station eNB1, the base station eNB1 serves as the master base station, and the base station eNB2 that will perform the CoMP transmission serves as the slave base station.

In this case, the terminal may send a request for the CoMP transmission to the master base station and the slave base station. Otherwise, the master base station may send the request for the CoMP transmission to the terminal and the slave base station. Further, in response to the request, to determine whether it is possible to perform the CoMP transmission, the terminal reports a measurement result of the radio channel quality between the terminal and the slave base station (e.g., as a radio channel quality index "CQI2") to the master base station via the slave base station or directly to the master base station.

Upon receiving the report, the master base station determines whether it is possible to perform the CoMP transmission based on "CQI1", which is a radio channel quality index between the terminal and the master base station, and the "CQI2".

When determining that it is possible to perform the CoMP transmission, the master base station notifies the determination result (execution (performance) of the CoMP transmission) and also the CoMP-RNTI ($n_{ComP-RNTI}$), (Physical) cell ID ($N_{ID}^{cell}$), and slot number ($n_s$) to the slave base station and the terminal. After that, the master base station performs the signal processing described above.

In the above description, it is assumed that one radio resource (e.g., one frequency) is allocated to one service area of one base station. Therefore, if, for example, there is one base station having six sectors using four frequencies, it may be interpreted that there are 24 base stations.

In such a case, the CoMP transmission may be performed by two base stations which are "apparently" separated from each other and by two different sectors even if those two different sectors belong to the same one base station. In such case, the above method may also be used.

First embodiment:

Example configuration of master base station 100-1

Next, an example block diagram of the master base station 100-1 according to the first embodiment is described with reference to the drawings.

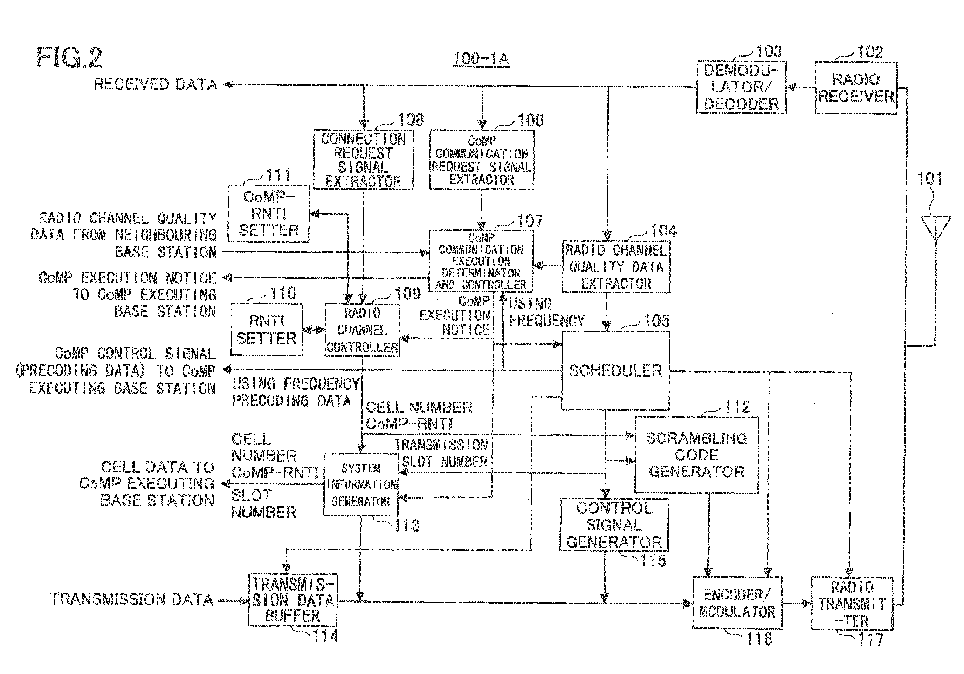

FIG. 2 illustrates an example block diagram of the master base station according to the first embodiment. As illustrated in FIG. 2, the master base station 100-1A includes an antenna 101, a radio receiver 102, a demodulator/decoder 103, a radio channel quality information extractor 104, a scheduler 105, a CoMP communication request signal extractor 106, a CoMP communication performance (execution) determinator and controller (hereinafter may be simplified as a "controller") 107, a connection request signal extractor 108, a radio channel controller 109, an RNTI setter 110, a CoMP-RNTI setter 111, a scrambling code generator 112, a system information generator 113, a transmission data buffer 114, a control signal generator 115, an encoder/modulator 116, and a radio transmitter 117.

Herein, it is assumed that a "receiver" includes the radio receiver 102 and the demodulator/decoder 103 and a "transmitter" includes the encoder/modulator 116 and the radio transmitter 117. Further, it is assumed that the demodulator/decoder 103 includes a "descrambler" and the encoder/modulator 116 includes a "scrambler".

The antenna 101 transmits and receives a radio signal to and from the terminal 200. The radio receiver 102 outputs a received signal based on the radio signal received by the antenna 101. The demodulator/decoder 103 performs demodulation and decoding on the received signal from the radio receiver 102.

The radio channel quality information extractor 104 extracts a radio channel quality information from the received signal from the demodulator/decoder 103. Herein, the "radio channel quality information" refers to, for example, the data transmitted from the terminal 200. Further, the radio channel quality information extractor 104 outputs the extracted radio channel quality information to the scheduler 105 and the controller 107.

Based on the radio channel quality information from the radio channel quality information extractor 104, the scheduler 105 determines the code rate, modulation method and the like (i.e., performs scheduling) to be used in downlink communications to the terminal 200. Further, the scheduler 105 outputs the scheduling data related to the determined code rate and the like to the control signal generator 115.

Further, the scheduler 105 transmits an information item indicating the radio resources to be used (hereinafter "radio resource data") and precoding data, which are included in the scheduling data, as the CoMP control signal, to the slave base station 100-2. Further, the scheduler 105 transmits a transmission slot number to the system information generator 113 and the scrambling code generator 112.

Further, in the above descriptions, the term "radio resource" refers to a grid in a time domain and a frequency domain (i.e., sub-carrier) in the LTE systems, and the minimum unit of the radio resource may be called a Resource Block (RB).

Further, the scheduler 105 controls the encoder/modulator 116 and the radio transmitter 117, so that the coding process and the like are performed on the transmission data based on the determined scheduling data.

The CoMP communication request signal extractor 106 extracts the CoMP communication request signal from the received signal from the demodulator/decoder 103. The "CoMP communication request signal" refers to a signal transmitted from the terminal 200 when the terminal 200 has a request to perform the CoMP communications.

The controller 107 determines, for example, whether the CoMP transmission is to be performed. When determining that the CoMP transmission is to be performed, the controller 107 notifies a CoMP transmission execution notice to the slave base station 100-2. In this case, the controller 107 determines whether the CoMP transmission is to be performed based on, for example, the radio channel quality information from the radio channel quality information extractor 104 and the radio channel quality information from the neighbouring base station (e.g., the slave base station 100-2).

Further, the CoMP transmission execution notice is transmitted from the controller 107 to the scheduler 105, the radio channel controller 109, and the system information generator 113. Details of the determination whether the CoMP transmission is to be performed are described below.

The connection request signal extractor 108 extracts a connection request signal from the demodulated and decoded received signal. The "connection request signal" refers to a signal to be used when, for example, the terminal 200 has a request for channel connection with the master base station 100-1.

The radio channel controller 109 inputs the connection request signal from the connection request signal extractor 108. Further, upon inputting (receiving) the CoMP transmission execution notice from the controller 107, the radio channel controller 109 outputs, for example, any of the cell numbers among a plurality of cell numbers that are internally stored and the CoMP-RNTI that is set by the CoMP-RNTI setter 111 to the scrambling code generator 112 and the system information generator 113.

Further, when the CoMP transmission execution notice is not input (i.e., the CoMP transmission is not to be performed), the radio channel controller 109 outputs, for example, any of the cell numbers among a plurality of cell numbers that are internally stored and the RNTI set by the RNTI setter 110 to the scrambling code generator 112 and the system information generator 113.

The RNTI setter 110 sets (generates) the RNTI in response to a request for setting the RNTI from the radio channel controller 109. Further, the RNTI setter 110 outputs the generated RNTI to the radio channel controller 109.

The CoMP-RNTI setter 111 sets the CoMP-RNTI in response to a request for setting the CoMP-RNTI from the radio channel controller 109. Further, the CoMP-RNTI setter 111 outputs the generated CoMP-RNTI from the radio channel controller 109.

The scrambling code generator 112 generates an initial value of the scrambling code based on, for example, the transmission slot number from the scheduler 105 and the cell number and the CoMP-RNTI from the radio channel controller 109, so as to sequentially generate the scrambling code. Details of the scrambling code generator 112 are described below. Further, the scrambling code generator 112 outputs the generated scrambling code to the encoder/modulator 116.

The system information generator 113 generates cell information based on the cell number and the CoMP-RNTI from the radio channel controller 109 and the transmission slot number from the scheduler 105. Further, the generated cell information are transmitted as a cell data signal to the base station (e.g., the slave base station 100-2) that is to perform the CoMP transmission. Further, the cell data signal is output to the encoder/modulator 116 as well so as to be transmitted to the terminal 200.

The transmission data buffer 114 temporarily stores the transmission data to be transmitted from the master base station 100-1 to the terminal 200.

The control signal generator 115 generates a control signal including the scheduling data from the scheduler 105, and outputs the generated control signal to the encoder/modulator 116.

The encoder/modulator 116 encodes the transmission data from the transmission data buffer 114 based on the scheduling data from the scheduler 105, and performs the scrambling process on (scrambles) the encoded transmission data by using the scrambling code generated by the scrambling code generator 112.

Further, the encoder/modulator 116 performs the encoding process and the like on the cell data from the system information generator 113 and the control signal from the control signal generator 115 as well. In this case, the encoder/modulator 116 may further perform the scrambling process on the encoded cell data and control signal.

The radio transmitter 117 performs a weighting process and the like on the transmission data and the like from the encoder/modulator 116 based on the precoding data generated by the scheduler 105. Further, the radio transmitter 117 generates, for example, a pilot signal (or a known signal). The output from the radio transmitter 117 is transmitted as a radio signal to the terminal 200 via the antenna 101.

First embodiment:

Example configuration of slave base station 100-2

Next, an example block diagram of the slave base station 100-2 according to the first embodiment is described with reference to the drawings.

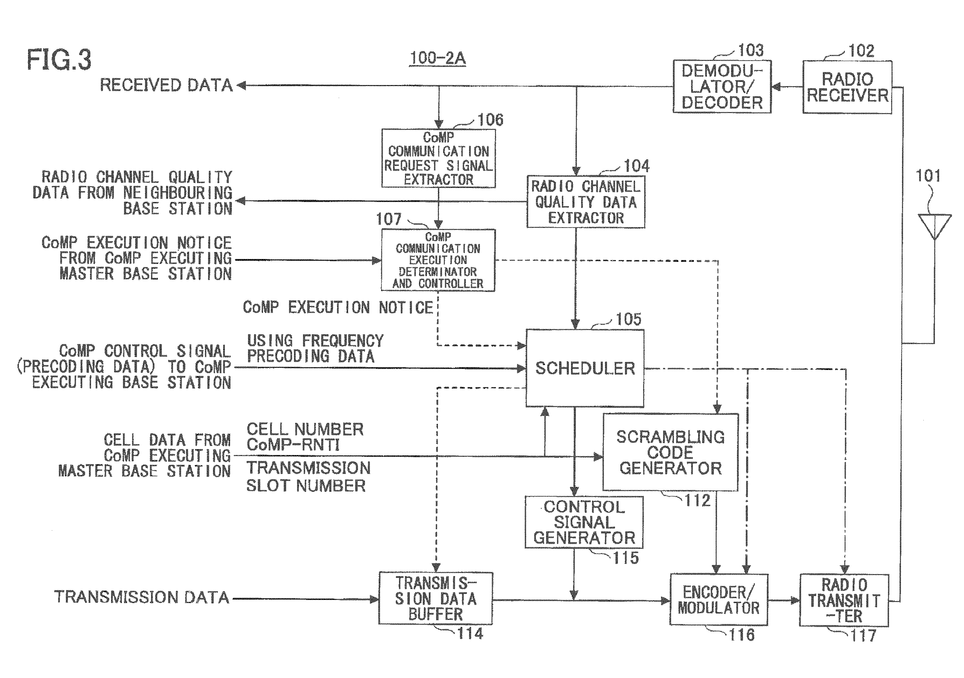

FIG. 3 illustrates an example block diagram of the slave base station according to the first embodiment. In the configuration of the slave base station of FIG. 3, the same reference numerals used in FIG. 2 are used to describe the functional blocks having similar functions, and the repeated specific description may be omitted.

As illustrated in FIG. 3, the slave base station 100-2A includes the antenna 101, the radio receiver 102, the demodulator/decoder 103, the radio channel quality information extractor 104, the scheduler 105, the CoMP communication request signal extractor 106, the controller 107, the scrambling code generator 112, the system information generator 113, the transmission data buffer 114, the control signal generator 115, the encoder/modulator 116, and the radio transmitter 117.

When the controller 107 inputs the CoMP communication request signal from the CoMP communication request signal extractor 106 and further receives the CoMP transmission execution notice from the master base station 100-1, the controller 107 outputs the CoMP transmission execution notice to the scheduler 105.

The scheduler 105 performs scheduling in downlink based on the radio channel quality information from the radio channel quality information extractor 104. Further, when the scheduler 105 receives the CoMP transmission execution notice from the controller 107 and further receives the CoMP control signal from the master base station 100-1, the scheduler 105 performs scheduling for the CoMP transmission. Further, the scheduler 105 controls the encoder/ modulator 116 and the radio transmitter 117 to perform the encoding and modulation processes for the transmission in accordance with the scheduling.

The scrambling code generator 112 inputs the cell data (i.e., the cell number, CoMP-RNTI, and transmission slot number), generates the initial value of the scrambling code based on the cell data, and sequentially generates the scramble code. Details of the operations are described below. The scrambling code generator 112 generates the scrambling code based on the cell data from the master base station 100-1.

Therefore, the master base station and the slave base station generate the same scramble code. The generated scramble code is output to the encoder/modulator 116 to be used in the scrambling process to be performed on the transmission data transmitted from that slave base station 100-2.

First embodiment

Example configuration of terminal 200

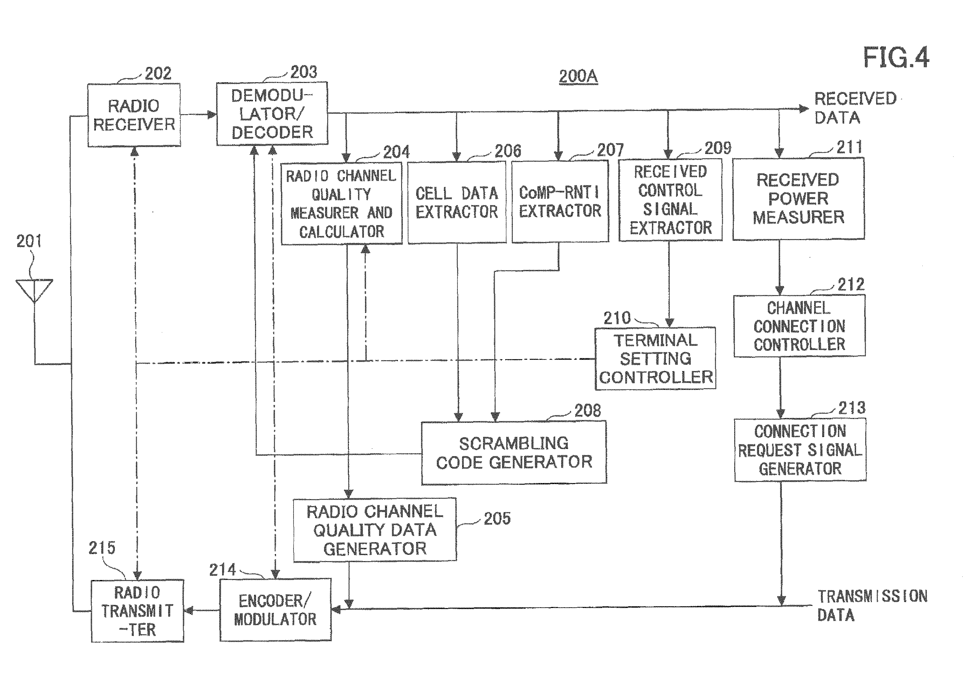

Next, an example block diagram of the terminal 200 according to the first embodiment is described with reference to the drawings FIG. 4 illustrates an example block diagram of the terminal 200A according to the first embodiment.

As illustrated in FIG. 4, the terminal 200A includes an antenna 201, a radio receiver 202, a demodulator/decoder 203, a radio channel quality measurer and calculator (hereinafter "calculator") 204, a radio channel quality information generator 205, a cell data extractor 206, a CoMP-RNTI extractor 207, a scrambling code generator 208, a received control signal extractor 209, a terminal setting controller 210, a received power measurer 211, a channel connection controller 212, a connection request signal generator 213, an encoder/modulator 214, and a radio transmitter 215.

The antenna 201 transmits and receives a radio signal to and from the base stations 100-1 and 100-2. The radio receiver 202 outputs a received signal based on the radio signal received by the antenna 201. The demodulator/ decoder 203 demodulates the received signal in accordance with the demodulation method or the like set by the terminal setting controller 210, descrambles (performs descramble on) the demodulated received signal using the scrambling code generated by the scrambling code generator 208, and decodes the descrambled received signal based on the coding rate set by the terminal setting controller 210.

The calculator 204 performs radio quality measurement of radio channels on the pilot signal or the like transmitted from the master base station 100-1 and the slave base station 100-2.

Namely, the calculator 204 measures the radio channel quality by measuring a Signal to Interference plus Noise Ratio (SINR) of the pilot signal or the like.

The radio channel quality information generator 205 generates the radio channel quality information based on the radio channel quality output from the calculator 204. Here, the radio channel quality information refers to, for example, a Channel Quality Indicator (CQI). The generated radio channel quality information is transmitted to the encoder/modulator 214.

The cell data extractor 206 extracts the cell number from the received signal output from the demodulator/ decoder 203. Further, the cell data extractor 206 outputs the extracted cell number to the scrambling code generator 208.

The CoMP-RNTI extractor 207 extracts the CoMP-RNTI from the received signal output from the demodulator/ decoder 203. Further, the CoMP-RNTI extractor 207 outputs the extracted CoMP-RNTI to the scrambling code generator 208.

The scrambling code generator 208 generates the initial value of the scrambling code based on the cell data (including, for example, the cell number, CoMP-RNTI), and sequentially generates the scrambling code. The scrambling code generator 208 outputs the generated scrambling code to the demodulator/decoder 203.

The received control signal extractor 209 extracts the control signal from the received signal, and outputs the extracted control signal to the terminal setting controller 210.

The terminal setting controller 210 controls the radio receiver 202 and the demodulator/decoder 203 so as to demodulate and decode the received data from the base stations 100-1 and 100-2 based on the scheduling data included in the control signal.

The received power measurer 211 measures, for example, the received power of the pilot signal of the received signal, and outputs the measurement result to the channel connection controller 212. Further, the channel connection controller 212 determines whether lines to the base stations 100-1 and 100-2 are to be connected based on the received power acquired from the received power measurer 211.

The connection request signal generator 213 generates the connection request signal based on an instruction signal, and outputs the generated connection request signal to the encoder/modulator 214.

The encoder/modulator 214 performs an encoding and modulation process on the radio channel quality information, connection request signal and the like. Further, the radio transmitter 215 performs transmission power control on the encoded radio channel quality information and the like, and outputs the controlled radio channel quality information and the like as a radio signal to the antenna 201.

By doing this, the radio channel quality information and the like are transmitted as a radio signal to the base stations 100-1 and 100-2 via the antenna 201.

First embodiment

Example configuration of terminal 200 (modified

example 1)

Next, another example configuration (modified example 1) of the terminal 200 according to the first embodiment is described with reference to the drawings.

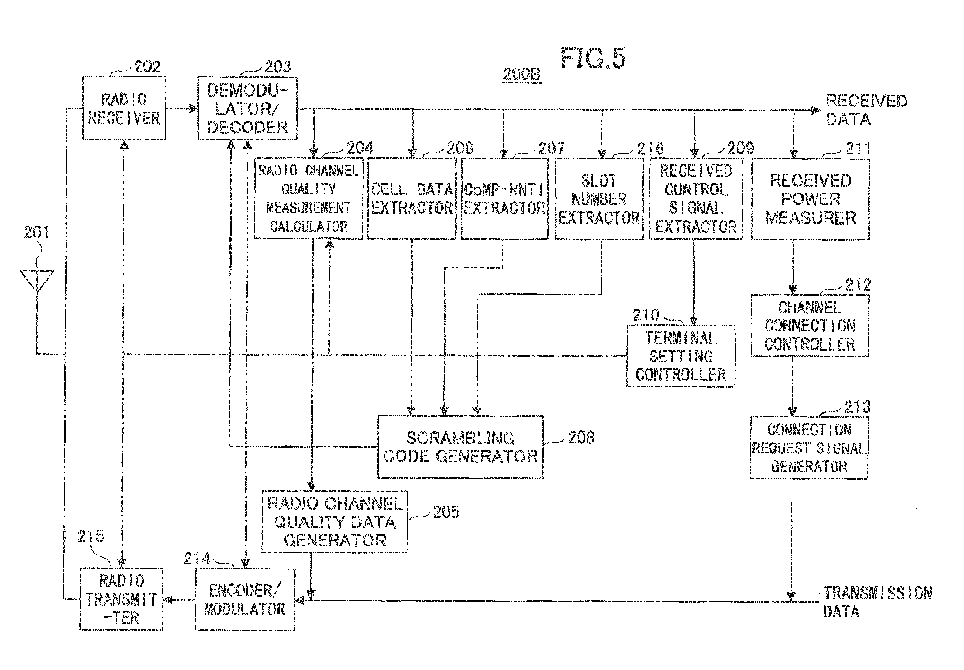

FIG. 5 illustrates an example configuration (modified example 1) of a terminal according to the first embodiment. In the example of FIG .5, the same reference numerals as those in the terminal 200A of FIG. 4 are used to describe the blocks having substantially the same functions, and the repeated or specific descriptions thereof may be omitted.

As illustrated in FIG. 5, a terminal 200B includes the antenna 201, the radio receiver 202, the demodulator/decoder 203, the calculator 204, the radio channel quality information generator 205, the cell data extractor 206, the CoMP-RNTI extractor 207, the scrambling code generator 208, the received control signal extractor 209, the terminal setting controller 210, the received power measurer 211, the channel connection controller 212, the connection request signal generator 213, the encoder/modulator 214, the radio transmitter 215, and a slot number extractor 216.

Here, the terminal 200B according to the modified example 1 differs from the terminal 200A of the above described embodiment 1 in that the terminal 200B further includes the slot number extractor 216.

The slot number extractor 216 extracts the slot number from the received signal output from the demodulator/decoder 203. The slot number extractor 216 outputs the extracted slot number to the scrambling code generator 208.

By doing this, the scrambling code generator 208 generates the initial value of the scrambling code based on the cell data (including the cell number, CoMP-RNTI, slot number and the like), and sequentially generates the scrambling code. The scrambling code generator 208 outputs the generated scrambling code to the demodulator/decoder 203. The demodulator/decoder 203 descrambles the received data based on the scrambling code acquired from the scrambling code generator 208. Example configuration of scrambling code generator

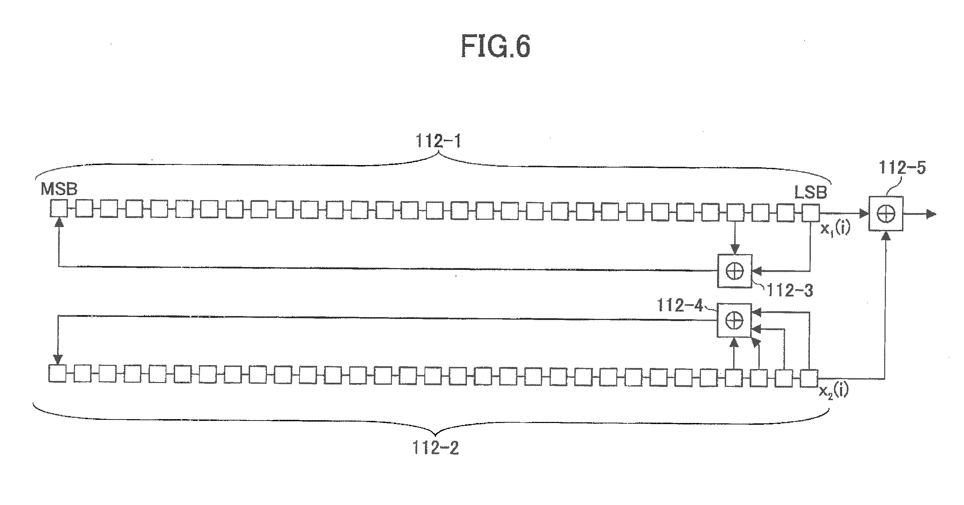

Next, an example configuration of the scrambling code generator 112 of the master base station 100-1 and the slave base station 100-2 and the scrambling code generator 208 of the terminals 200A and 200B is described. FIG. 6 schematically illustrates an example configuration of the scrambling code generators 112 and 208.

The scrambling code generators 112 and 208 includes respective first and second registers (or flip-flops) 112-1 and 112-2, and first through third exclusive OR circuits 112-3 through 112-5.

The scrambling code generators 112 and 208 generates, for example, a gold code (or scrambling code) having a length of "31", and the output of the code becomes the scrambling code c(n). The generating polynomial of the scrambling code c(n) is given in the above formula (2)

Example communication process in first embodiment

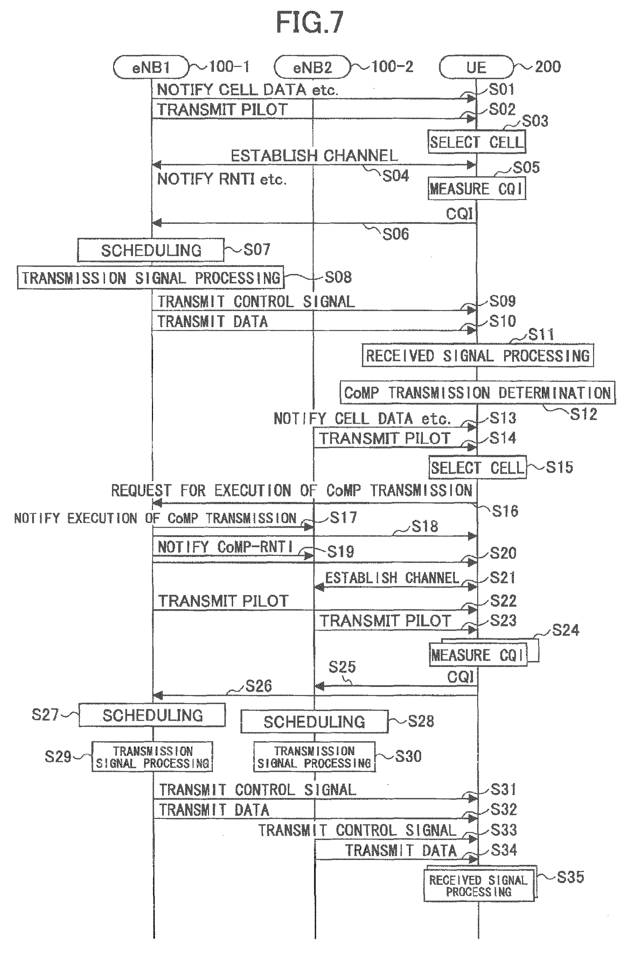

Next, an example communication process according to the first embodiment is described. FIG. 7 is an example sequence diagram of an example communication process according to the first embodiment. The example of FIG. 7 illustrates an example of a downlink operation. Here, it is assumed that the terminal (UE) 200 exists in an area where the terminal (UE) 200 is communicable with not only the master base station 100-1 but also the slave base station 100-2.

First, the master base station 100-1 broadcasts the cell data to the terminal 200 (step S01). Further, the master base station 100-1 transmits common pilot (pilot or a pilot signal) to the terminal 200 (step S02). For example, the pilot signal is generated by the radio transmitter 117 or the like of the master base station 100-1.

Next, the terminal having received the common pilot selects a cell to be communicated with (step S03), and establishes a channel to connect with the selected cell (step S04). For example, the received power measurer 211 of the terminal 200 measures the received power of the pilot signal, and the channel connection controller 212 selects the cell (e.g., master base station 100-1) having the highest received quality (e.g., the highest received power).

Then, the connection request signal generator 213 generates the connection request signal and transmits the generated connection request signal to the master base station 100-1 to establish the channel to the master base station 100-1. By doing this, the terminal 200 establishes a radio channel between the terminal 200 and the master base station 100-1.

Further, in the establishment of the radio channel, the network including the master base station 100-1 establishes the terminal identification number RNTI of the terminal 200, and notifies (transmits) the established terminal identification number RNTI to the terminal 200.

After the establishment of the radio channel, the terminal 200 measures the radio channel quality (e.g., CQI) based on the common pilot (step S05). Further, the terminal 200 reports the measured radio channel quality information to the master base station 100-1. In this case, for example, the calculator 204 of the terminal 200 measures the radio channel quality based on the pilot signal, the radio channel quality information generator 205 generates the radio channel quality information, and the generated radio channel quality information are transmitted to the master base station 100-1.

Next, the master base station 100-1 performs scheduling based on the received radio channel quality information (step S06). For example, the scheduler 105 of the master base station 100-1 performs the scheduling based on the radio channel quality information extracted by the radio channel quality information extractor 104.

Next, the master base station 100-1 performs transmission signal processing. For example, specifically, after receiving the report of the radio channel quality information (e.g., CQI) from the terminal 200, the master base station 100-1 selects (determines) which terminal the base station 100-1 should perform uplink or downlink communication (i.e., select the terminal with which the master base station 100-1 should communicate) with.

Further, the master base station 100-1 selects, for example, the transmission method (i.e., coding method and coding rate) and radio resources to be used, and notifies the selected transmission method to the terminal 200. In the following, a case of downlink communications is described.

Next, the encoder/modulator 116 of the master base station 100-1 performs the signal processing such as encoding, modulating and the like on a transmission control signal generated based on the selected transmission method, so that the processed transmission control signal is transmitted to the terminal 200 (step S09).

Similarly, the encoder/modulator 116 of the master base station 100-1 performs the signal processing such as encoding, modulating and the like on the transmission data, so that the processed transmission data are transmitted to the terminal (step S10).

The terminal 200 performs a received signal processing (step S11). Specifically, the terminal 200 receives the (transmission) control signal, and the demodulator/decoder 203 demodulates and decodes the received control signal to acquire the demodulated and decoded control signal. Similarly, the terminal 200 receives the transmission data, and the demodulator/decoder 203 demodulates and decodes the received transmission data to acquire the demodulated and decoded transmission data.

Here, the terminal 200 performs CoMP transmission determination. Namely, the terminal 200 determines whether the CoMP transmission is to be performed (step S12). Specifically, even when the above communications are performed, the terminal 200 periodically or intermittently receives the cell data, the pilot transmitted from other base station (e.g., the slave base station 100-2) (steps S13 and S14), and measures and calculates the radio quality with the other base station.

Here, for example, it is assumed that the terminal moves to the cell end of the master base station 100-1 so that the radio channel quality with the master base station 100-1 is reduced and the transmission characteristics thereof are deteriorated. To overcome the problem, when the terminal 200 determines that the transmission characteristics may be restored (improved) if the CoMP transmission from the master base station 100-1 and the slave base station 100-2 is performed, the terminal 200 further determines whether it is possible to perform the CoMP transmission based on the radio channel quality (e.g., CQI) with the other base station and also selects the cell (e.g., the cell of the slave base station 100-2) where the CoMP transmission is to be performed (step S15).

Next, the terminal 200 sends a request (CoMP transmission request) to the master base station 100-1 so that the master base station 100-1 performs the CoMP transmission with the slave base station 100-2 (step S16).

The master base station 100-1 having received the CoMP transmission request sends a notice to the slave base station 100-2 and the terminal 200 that the CoMP transmission is to be executed (steps S17 and S18).

Further, the master base station 100-1 further sends a notice of the CoMP-RNTI to the slave base station 100-2 and the terminal 200 (steps S19 and S20). The slave base station 100-2 and the terminal 200 having received notices in steps S17 through S20 performs channel establishment (step S21).

After that, the terminal 200 receives the pilot signals from the master base station 100-1 and the slave base station 100-2 (steps S22 and S23), measures and calculates the radio channel qualities of the received pilot signals (step S24), and reports the measured and calculated radio channel qualities to the master base station 100-1 and the slave base station 100-2 (steps S25 and S26).

Further, the master base station 100-1 and the slave base station 100-2 having received the respective radio channel qualities perform the respective scheduling (steps S27 and S28) and transmission signal processings (e.g., scrambling) (steps S29 and S30). In the process in steps S29 and S30, the master base station 100-1 and the slave base station 100-2 performs, for example, the process similar to the process in step S08, selects the terminal to be communicated with (e.g., terminal 200), and selects the transmission method to be used.

Next, the master base station 100-1 and the slave base station 100-2 generate respective control signals (transmission control signals) related to the selected transmission methods, and perform coding and modulation on the generated control signals. Further, the master base station 100-1 and the slave base station 100-2 perform coding and modulation on the respective transmission data based on the selected transmission methods.

After that, the master base station 100-1 transmits the transmission control signal and transmission data to the terminal 200 (steps S31 and S32). The slave base station 100-2 transmits the transmission control signal and transmission data to the terminal 200 (steps S33 and S34).

The terminal 200 receives the control signal from the master base station 100-1 and the slave base station 100-2 and demodulates and decodes the received control signal to extract the control signal. Further, based on the extracted control signal, the terminal 200 performs demodulating and decoding (e.g., descrambling) on the received data to acquire the (descrambled) data (step S35). Example communication process in first embodiment

(modified example 1)

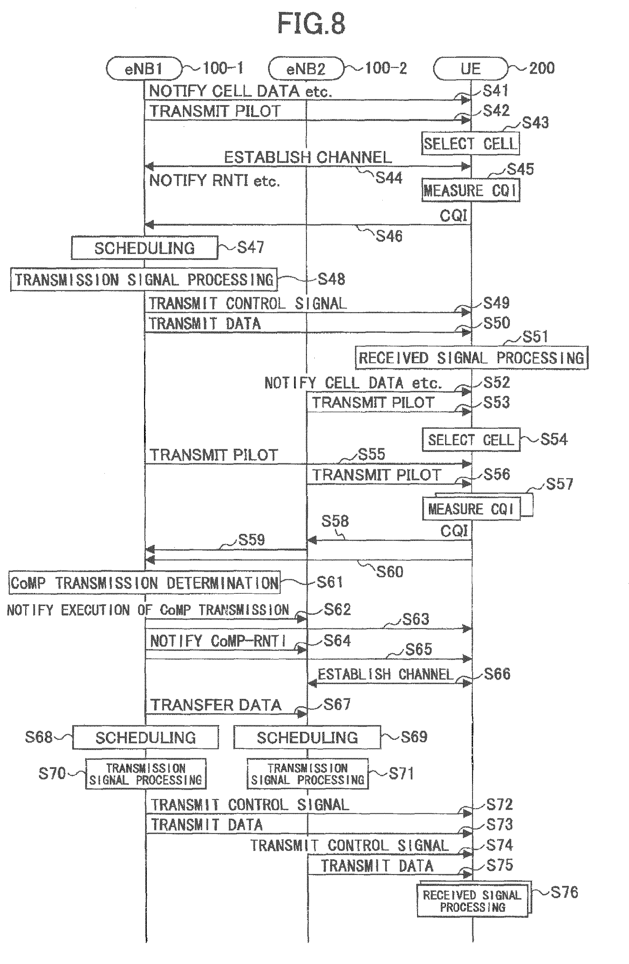

Next, another communication process according to the first embodiment (modified example 1) is described. FIG. 8 is another example sequence diagram of a communication process of the first embodiment (modified example 1).

Here, a main difference between the communication process according to the modified example 1 in FIG. 8 and the communication process in FIG. 7 is described. First, in the example communication process in FIG. 7, the transmission data are separately transmitted from a higher-level device (e.g., Mobility Management Entity, network (MME)) to the master base station 100-1 and the slave base station 100-2. On the other hand, in the modified example 1, the transmission data from the higher-level device are transmitted only to the master base station 100-1.

Further, in the CQI transmission, in the example communication process in FIG. 7, only the configuration that the radio channel quality information are transmitted to each of the base stations is provided. On the other hand, in the modified example 1, the radio channel quality information reported to the slave base station 100-2 is also reported to the master base station 100-1 via a network or the like.

Further, in the example communication process in FIG. 7, when the CoMP transmission is requested, it is the terminal 200 that selects the base station that is to perform the CoMP transmission. On the other hand, in the modified example 1, it is the master base station 100-1 that selects the base station that is to perform the CoMP transmission.

Here, in the communication process in FIG. 8, a configuration different from that in the communication process in FIG. 8 is described.

In the modified example 1, after the process in step S51 ends, the terminal 200 periodically or intermittently receives the cell, pilot and the like from other base station (e.g., slave base station 100-2) (steps S52 and S53) without determining whether the CoMP transmission is possible, measures and calculates the radio quality with the other base station, and selects the cell (step S54).

After that, the terminal receives the pilot signals from the master base station 100-1 and the slave base station 100-2 (steps S55 and S56), measures and calculates the radio channel quality information (e.g., CQI) (step S57), and reports the calculated radio channel quality information to the slave base station 100-2 (step S58). The slave base station 100-2 transmits the radio channel quality information acquired from the terminal 200 to the master base station via a network (step S59).

Further, the terminal 200 transmits the radio channel quality information to the master base station 100-1 (step S60).

After that, the master base station 100-1 performs the CoMP transmission determination as described above (step S61), sends a notice of performing the CoMP transmission to the slave base station 100-2 and the terminal 200 (steps S62 and S63). Similarly, the master base station 100-1 sends a notice of the CoMP-RNTI to the slave base station 100-2 and the terminal 200 (steps S64 and S65).

By doing this, the slave base station 100-2 and the terminal 200 establish channels based on the acquired data (step S66). Further, the master base station 100-1 transfers the data necessary for the scheduling to the slave base station (step S67).

Further, the process in steps S41 through S51 and steps S68 through S76 are similar to that in steps S01 through S11 and steps S27 through S76; therefore the repeated descriptions thereof are herein omitted.

Example communication process in first embodiment (modified example 2)

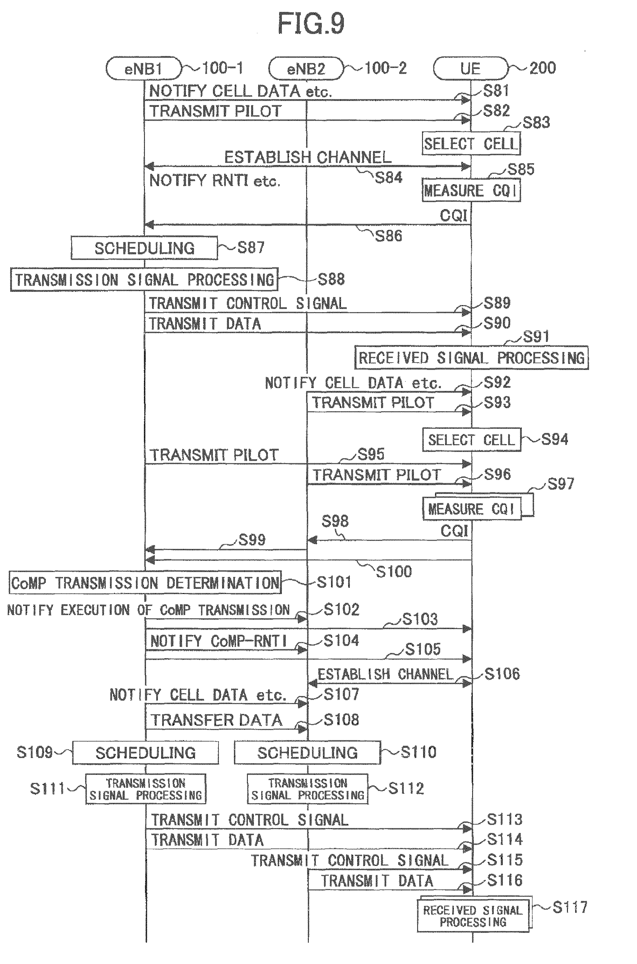

Next, another communication process according to the first embodiment (modified example 2) is described. FIG. 9 is another example sequence diagram of a communication process of the first embodiment (modified example 2).

A main difference between the modified example 2 of FIG. 9 and the modified example 1 of FIG. 8 is that the modified example 2 additionally includes a process that the master base station 100-1 notifies (transmits) the cell data (e.g., cell ID and slot number) and the like to the slave base station 100-2 and the terminal 200 (step S107). By doing this, the slave base station 100-2 may perform the scheduling based on the cell data and the like (step S110).

Further, the process in steps S81 through S106 and steps S108 through S117 are similar to that in steps S41 through S76; therefore the repeated descriptions thereof are herein omitted.

Example communication process in first embodiment (modified example 3)

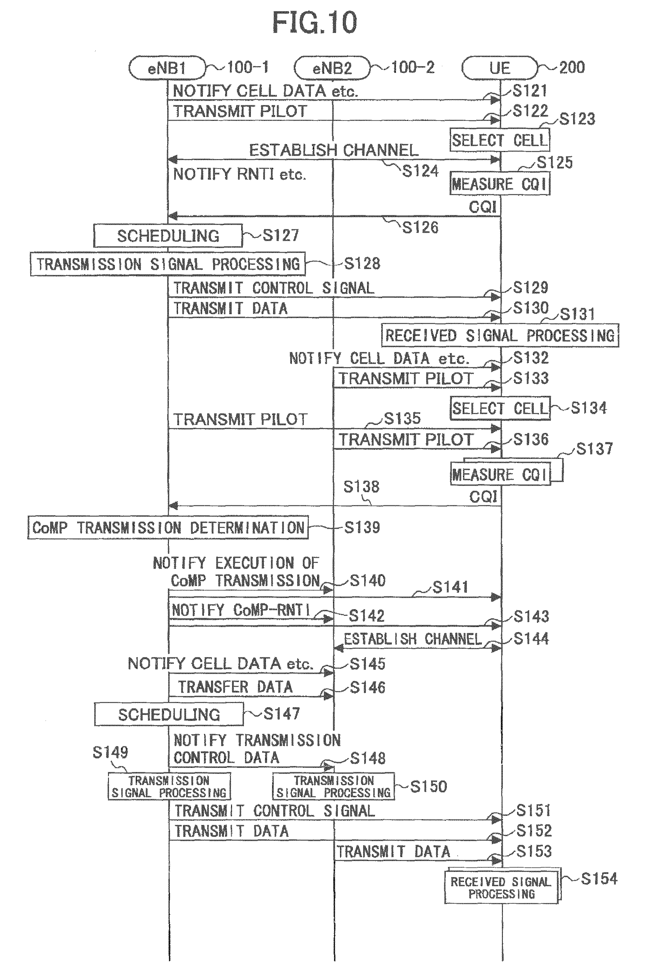

Next, another communication process according to the first embodiment (modified example 3) is described. FIG. 10 is another example sequence diagram of a communication process of the first embodiment (modified example 3).

Main differences between the modified example 3 of FIG. 10 and the modified example 2 of FIG. 9 are described below. First, in the modified example 3, the radio channel qualities of the master base station 100-1 and the slave base station 100-2 measured by the terminal 200 are reported only to the master base station 100-1 (step S138).

Further, in the modified example 3, the slave base station 100-2 has no data to be transmitted to a communicating terminal (e.g., terminal 200) that is the other side of the CoMP transmission of the slave base station 100-2. In this case, the data to be transmitted to the opposing terminal are transmitted from a higher-level device to only the master base station 100-1 serving as a master.

Therefore, to transmit the data from the slave base station 100-2, the transmission data are transferred from the master base station 100-1 to the slave base station 100-2 (step S146).

Further, in the modified example 3, it is only the master base station 100-1 serving as a master that performs the scheduling (step S147). Further, in the modified example 3, the master base station 100-1 notifies transmission control data to the slave base station 100-2 (step S148). Further, in the modified example 3, both the master base station 100-1 and the slave base station 100-2 perform the transmission signal processing (steps S149 and S150).

Further, in the modified example 3, the master base station 100-1 transmits the transmission control signal and the transmission data to the terminal 200 (steps S151 and S152), and the slave base station 100-2 transmits only the transmission data to the terminal 200 (step S153).

Further, the process of steps S121 through S154 of FIG. 10 excepting steps described above is substantially similar to the communication processes already described above; therefore the repeated descriptions thereof are herein omitted.

Example communication process in first embodiment (modified example 4)

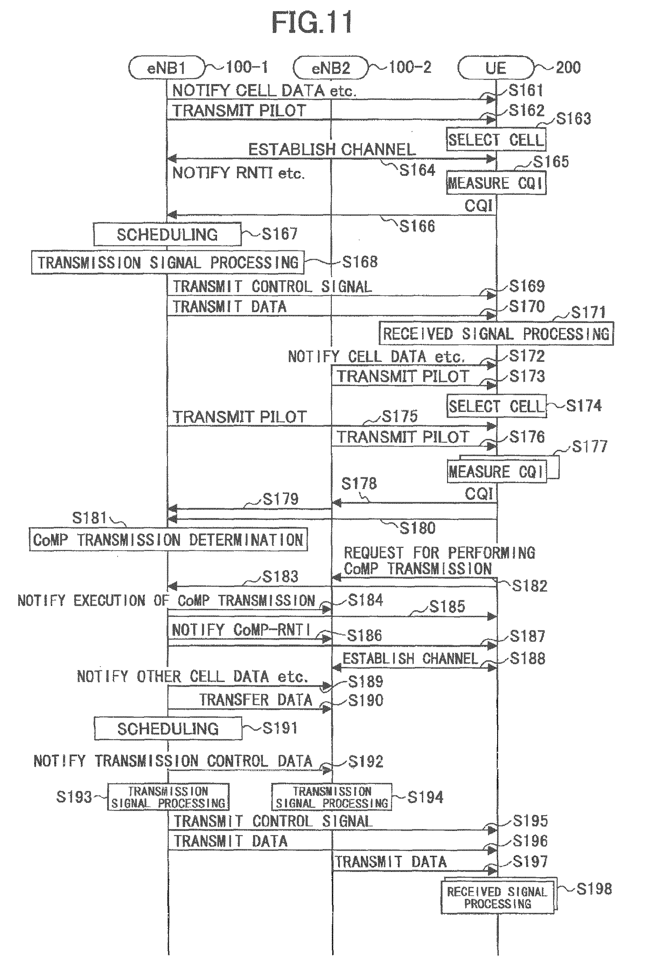

Next, another communication process according to the first embodiment (modified example 3) is described. FIG. 11 is another example sequence diagram of a communication process of the first embodiment (modified example 4).

Main differences between the modified example 4 of FIG. 11 and the modified example 3 of FIG. 10 are described below.

In the modified example 3, the master base station 100-1 determines whether it is desired to perform the CoMP transmission and further determines whether it is possible to perform the CoMP transmission. On the other hand, in the modified example 4, before the CoMP transmission request is transmitted from the terminal 200, the master base station 100-1 determines whether it is possible to perform the CoMP transmission (step S181).

Further, in the modified example 4, the terminal 200 transmits a request for performing the CoMP transmission to both the master base station 100-1 and the slave base station 100-2 (steps S182 and S183). In response to the request for performing the CoMP transmission from the terminal 200, the master base station notifies the CoMP transmission execution notice (steps S184 and S185).

Further, in the modified example 4, the master base station 100-1 further notifies another cell data and the like to the slave base station 100-2 (step S189).

Further, the process of steps S161 through S198 of FIG. 11 excepting steps described above is substantially similar to the communication processes already described above; therefore the repeated descriptions thereof are herein omitted.

Example communication process in first embodiment (modified example 5)

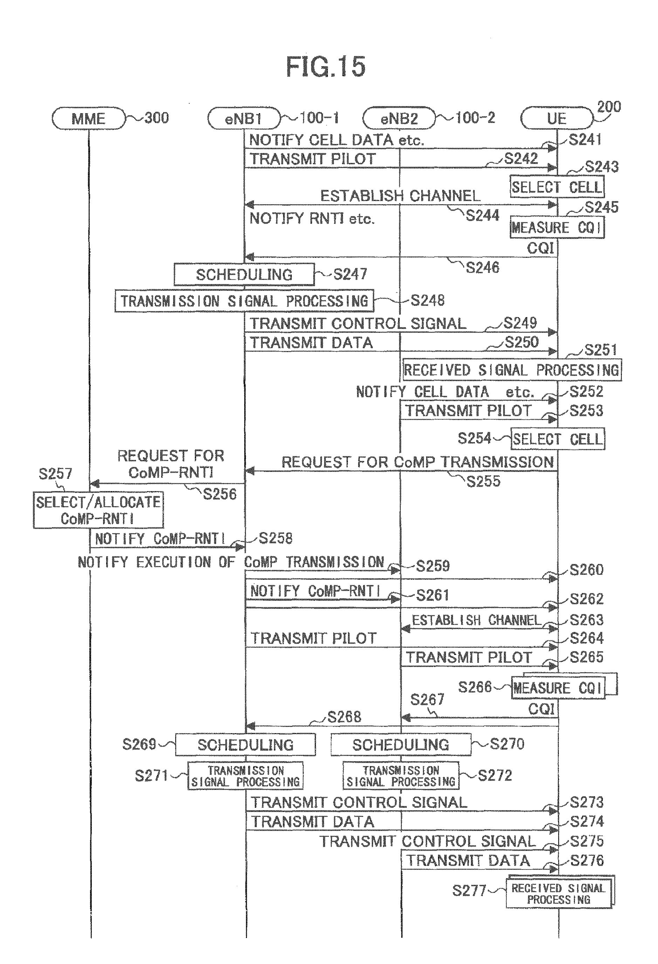

Next, another communication process according to the first embodiment (modified example 5) is described. FIG. 15 is another example sequence diagram of a communication process of the first embodiment (modified example 5).

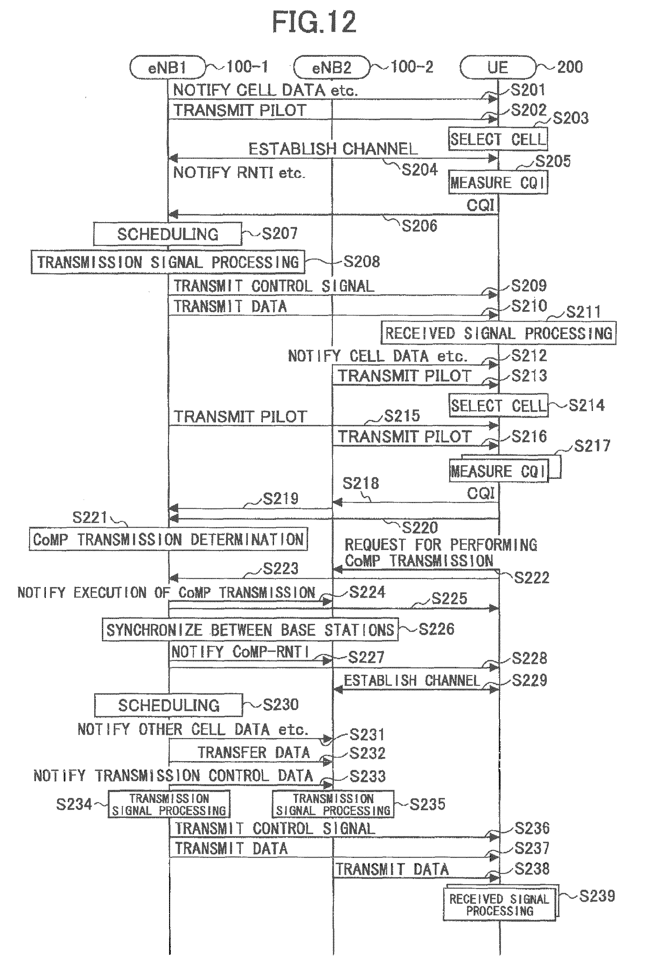

Main differences between the modified example 5 of FIG. 12 and the modified example 4 of FIG. 11 are described below.

In the modified example 4, it is assumed that the master base station 100-1 and the slave base station 1002 are in synchronized with each other. Here, the term "synchronization" refers to, for example, a state where the start timings including radio frames are synchronization with each other, a state where the corresponding slot numbers are identical, a state where the transmission frequencies thereof is the same as each other or the like.

Further, in the modified example 4, it is desired that at least the corresponding slot numbers are identical. Although, it is not completely the same as each other, if the difference is within a certain range (e.g., a time difference is 0.1 msec or less, a frequency difference is less than 100 Hz, and the like), the difference may be thought to be allowable.

On the other hand, in the modified example 5, after the master base station 100-1 determines the CoMP transmission and notifies the performing of the CoMP transmission to the slave base station 100-2 and the terminal 200 (steps S224 and S225), the master base station 100-1 and the slave base station 100-2 are synchronized with each other (step S226).

Further, in the process of step S226, the synchronization may be performed after the notifying of the CoMP-RNTI. Namely, it is desired that the synchronization between the base stations be achieved before the actual CoMP transmission is performed.

Further, the process of steps S201 through S239 of FIG. 12 excepting steps described above is substantially similar to the communication processes already described above; therefore the repeated descriptions thereof are herein omitted.

Second embodiment

Next, a second embodiment is described. In the second embodiment, the term of the physical cell ID is removed from the formula for calculating the initial value of the scrambling code.

Namely, in the first embodiment, the initial value of the scrambling code is calculated based on the formula (1). However, in this case, it is desired to transmit the data of the "CoMP-RNTI" (e.g., 16 bits), the (physical) cell ID ($N_{ID}^{cell}$) (e.g., 9 bits 0-503), and the slot number ($n_s$) (e.g. 5 bits 0-19) from the master base station 100-1 serving as a master to the slave base station 100-2 serving as a slave. The total number of bits in the data is 30 bits.

On the other hand, it is generally known that the fewer the data amount of the data to be transmitted (e.g., control data) is, the better the transmission efficiency of the data becomes. Therefore, it is desired to reduce the data amount (the number of bits) of such control data.

Further, a (physical) cell ID set to the slave base station is different from that set to the master base station, so that the (physical) cell ID is used to generate the scrambling code and the scrambling is performed on the data to be transmitted using the generated scrambling code.

However, upon receiving the physical) cell ID of the master base station, the slave base station may have to generate the scrambling code not based on the (physical) cell ID that is generally used but based on the (physical) cell ID of the master base station, which may cause an additional process.

To resolve the problem, in this embodiment, the term of physical cell ID is removed from the formula, so that the initial value of the scrambling code is calculated without transmitting the (physical) cell ID ($N_{ID}^{cell}$) and without using the (physical) cell ID of the master base station. Namely, in the second embodiment, the initial value of the scrambling code is calculated based on the following formula (4).

$$c_{\mathrm{init}} = n_{\mathrm{CoMP\text{-}RNTI}} \cdot 2^{14} + q \cdot 2^{13} + \lfloor n_s / 2 \rfloor \cdot 2^9 \quad \cdot \cdot \cdot \ (\,4\,)$$

By using the formula (4), as many as 9 bits of data amount in the data to be transmitted may be reduced, so that the workload of the scrambling process in the base station and the terminal may also be reduced.

Further, it is thought that the block diagram of the base stations and terminal, the sequence of the process and the like in the second embodiment may be described based on the description in the first embodiment. Therefore, specific descriptions in the second embodiment are herein omitted.

Third embodiment

Next, a third embodiment is described. In the third embodiment, the term of the slot number is removed from the formula for calculating the initial value of the scrambling code.

Namely, in the second embodiment, the term of the physical cell ID is removed from the formula for calculating the initial value of the scrambling code. However, in this embodiment, the term of the slot number is removed.

For example, in general, it is not assumed (guaranteed) that a System Frame Number (SFN) of a main base station (e.g., the master base station) is the same as that of a following (slave) base station (e.g., slave base station), and also it is not assumed (guaranteed) that the timing of the SFN and the timing of a header of a slot of the main base station are the same as those of the following base station.

Therefore, even when the headers of the slots are synchronized between the base stations, the slot numbers may differ from each other between the base stations. For example, there may be a case where the slot number of the main base station is "0" but the slot number of the following base station is "5".

To perform the CoMP transmission in such a case, it may be possible to generate the same initial value of the scrambling code and accordingly the same scrambling code unless the slot number is transmitted from the main base station to the following base station and the transmitted slot number is used. However, as described above, the fewer the amount of the control data is, the better the transmission efficiency becomes.

Further, the slave base station performs scrambling on the transmission data using the scrambling code that is generated based on the slot number different from that of the master base station. However, in a case of receiving the slot number of the base station, it is desired to separately generate the scrambling code using the slot number of the master base station which is different from the slot number. Namely, an additional process may be generated.

To resolve the problem, in the third embodiment, the term of the slot number is not transmitted (notified) removed from the formula for calculating the initial value of the scrambling code.

Namely, in the second embodiment, the term of the physical cell ID is removed from the formula for calculating the initial value of the scrambling code.

However, in this embodiment, the term of the slot number ($n_s$) is removed from the formula for calculating the initial value, so that the initial value of the scrambling code may be calculated without transmitting (notifying) the slot number ($n_s$) and without using the slot number of the master base station. Namely, the initial value of the scrambling code is calculated based on the following formula (5).

$$c_{\text{init}} = n_{\text{CoMP-RNTI}} \cdot 2^{14} + q \cdot 2^{13} + N_{\text{ID}}^{\text{cell}} \quad \cdot \cdot \cdot (\ 5\ )$$

By using the formula (5), as many as 5 bits of data amount in the data to be transmitted may be reduced, so that the workload of the scrambling process in the base station and the terminal may also be reduced.

Further, it is thought that the block diagram of the base stations and terminal, the sequence of the process and the like in the third embodiment may be described based on the descriptions in the first embodiment. Therefore, specific descriptions in the third embodiment are herein omitted.

Fourth embodiment

Next, a fourth embodiment is described. In the fourth embodiment, the terms of the physical cell ID and the slot number are removed from the formula for calculating the initial value of the scrambling code.

Namely, in the above second embodiment, a case is described where the initial value of the scrambling code is calculated without using the (physical) cell ID. Further, in the above third embodiment, a case is described where the initial value of the scrambling code is calculated without using the slot number.

On the other, in this fourth embodiment, the initial value of the scrambling code is calculated without using both the (physical) cell ID and the slot number. Further, the purpose and the effect of the fourth embodiment are similar to those in the second and third embodiments.

In the fourth embodiment, the initial value of the scrambling code is calculated based on the following formula (6).

$$c_{\text{init}} = n_{\text{CoMP-RNTI}} \cdot 2^{14} + q \cdot 2^{13} \quad \cdot \cdot \cdot (\ 6\ )$$

By using the formula (6), as many as 14 bits of data amount in the data to be transmitted may be reduced, so that the workload of the scrambling process in the base station and the terminal may also be reduced.

Further, it is thought that the block diagram of the base stations and terminal, the sequence of the process and the like in the fourth embodiment may be described based on the descriptions in the first embodiment. Therefore, specific descriptions in the third embodiment are herein omitted.

Fifth embodiment

Next, a fifth embodiment is described. In the fifth embodiment, the "CoMP-RNTI" is set by the higher-level device (e.g., MME) of the base stations. Here, the "RNTI" is issued by the Radio Resource Control (RRC) of the base station.

As in such a case where a certain base station issues the "Co-RNTI" that is to be used among a plurality of base stations including the certain base station, namely, in a case where the CoMP-RNTI is to be separately managed, the same CoMP-RNTI may collide among the base stations.

To prevent the occurrence of the problem, in the fifth embodiment, it is the higher-level device of the base stations that issues the "CoMP-RNTI" and centrally manages the issued "CoMP-RNTI". Namely, in the fifth embodiment, by issuing the CoMP-RNTI by the higher-level device of the base stations, it may become possible to manage the CoMP-RNTI while preventing the collision of the CoMP-RNTI.

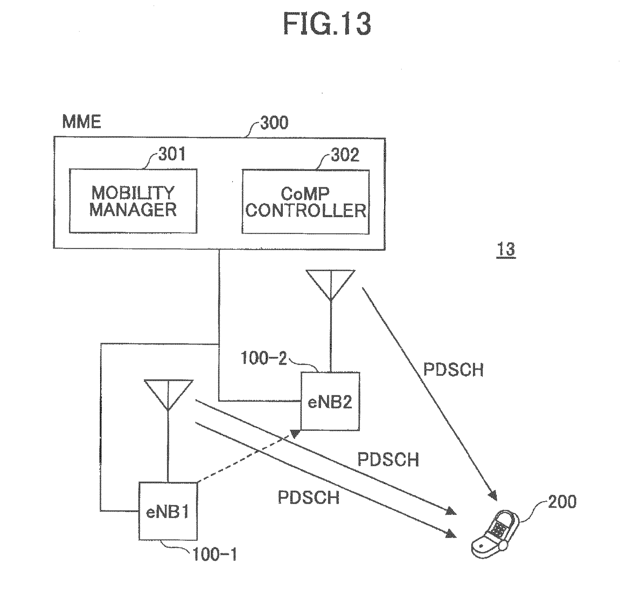

FIG. 13 schematically illustrates an example configuration of a radio communication system according to the fifth embodiment. Similar to the above example configuration according to the first embodiment, a radio communication system 10B in FIG. 13 includes two base stations (eNBs) 100-1 and 100-2, the terminal (UE) 200, and an MME (Mobility Management Entity) 300.

The base stations 100-1 and 100-2 transmit respective data different from each other, and the terminal 200 receives those data (in downlink). Further, the terminal 200 may transmit first data to the base station 100-1 and second data different from the first data to the base station 100-2 (in uplink). Each of the base stations 100-1 and 100-2 and the terminal 200 may perform so-called "CoMP communications" with each other. As described above, the base stations 100-1 and 100-2 refer to the master base station 100-1 and the slave base station 100-2, respectively.

The MME 300 includes a mobility manager 301 and a CoMP controller 302. The mobility manager 301 mainly performs the management (control) of mobility and the management of the positional registration of the base station(s). Further, the mobility manager 301 transmits mobility control data to the base stations 100-1, 100-2 and the like.

For example, the CoMP controller 302 issues and manages the CoMP-RNTI. Further, the CoMP controller 302 manages a plurality of CoMP-RNTIs whether each of the CoMP-RNTIs is being used or not. Specifically, for example, upon receiving a request for issuing a CoMP-RNTI from a base station (e.g., master base station 100-1), the CoMP controller 302 selects one of the CoMP-RNTIs that are not in use or that will not be used in the same area as that of the same CoMP-RNTI. Further, the CoMP controller 302 transmits the selected CoMP-RNTI to the base station in response to the request from the base station. Further, the MME 300 may function as a Serving Gate Way (S-GW) apparatus that transfers or relays data.

Namely, in the fifth embodiment, when it is determined that it is desired to perform the CoMP transmission, a request for issuing the CoMP-RNTI is issued to the MME 300. In response to the request, the MME 300 selects one of the CoMP-RNTIs that are not being used by the base stations which are under control by the other MMEs, and transmits the selected CoMP-RNTI to the base station having sent the request.

As the main base station (master base station 100-1), the base station having received the CoMP-RNTI transmits (transfers) the received CoMP-RNTI to the following base station (slave base station 100-2) and the terminal 200 that are to perform the CoMP transmission, so as to perform the CoMP transmission.

Further, when it is determined that it is desired to perform the CoMP transmission between a certain base station and a certain terminal, a request for issuing the CoMP-RNTI and identification data indicating the master base station 100-1 and the slave base station 100-2 are transmitted (notified) to the MME 300. Upon receiving the notice, the MME 300 selects a CoMP-RNTI as described above and transmits the selected CoMP-RNTI to the master base station 100-1 and the slave base station 100-2.

The master base station having received the notice of the CoMP-RNTI transmits the received CoMP-RNTI to the terminal 200 that is to perform the CoMP transmission. Further, in this case, the CoMP controller 302 of the MME 300 manages a plurality of CoMP-RNTIs whether each of the CoMP-RNTIs is being used or not, and further manages which CoMP-RNTI is being used by which of the base stations.

Further, in the fifth embodiment, the base station may determine whether it is desired to perform the CoMP transmission. However, it should be noted that the terminal 200 may also determine whether it is desired to perform the CoMP transmission, send a request for issuing the CoMP-RNTI to a base station, so that the base station having received the request may send a request to issue the CoMP-RNTI to the MME 300. By doing this, according to the fifth embodiment, it may become possible to prevent the collision of the CoMP-RNTI.

Further, in the above description, a case is described where it is the MME 300 that issued and manages the CoMP-RNTI(s). However, the present invention is not limited to this configuration. For example, Multi-cell/multicast Coordination Entity (MCE) that controls an MBSFN may issue and manage the CoMP-RNTI.

Fifth embodiment: example configuration of master base station 100-1

Next, an example block diagram of the master base station 100-1 according to the fifth embodiment is described with reference to the drawing. In the following descriptions, the same reference numerals are used to describe the blocks having substantially the same functions as those in the master base station 100-1 of FIG. 2, and repeated descriptions thereof may be herein omitted.

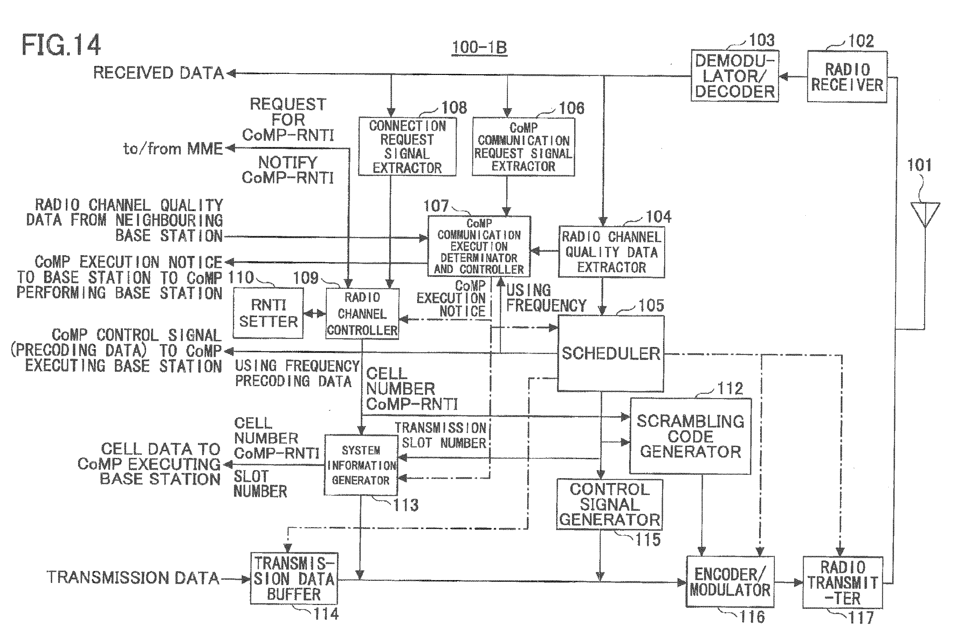

FIG. 14 illustrates an example block diagram of the master base station 100-1B according to the fifth embodiment. As illustrated in FIG. 14, the master base station 100-1B includes the antenna 101, the radio receiver 102, the demodulator/decoder 103, the radio channel quality information extractor 104, the scheduler 105, the CoMP communication request signal extractor 106, the CoMP communication execution determinator and controller (hereinafter may be simplified as the "controller") 107, the connection request signal extractor 108, the radio channel controller 109, the RNTI setter 110, the scrambling code generator 112, the system information generator 113, the transmission data buffer 114, the control signal generator 115, the encoder/modulator 116, and the radio transmitter 117.

In the fifth embodiment, when it is determined that the CoMP transmission is to be performed, the radio channel controller 109 sends a request for allocating the CoMP-RNTI (CoMP-RNTI request) to the MME which is the higher-level device. Further, upon receiving the notice of the CoMP-RNTI from the MME 300, the radio channel controller 109 transmits the received CoMP-RNTI to the slave base station 100-2 and the terminal 200.

Further, the block diagrams of the slave base station 100-2 and the terminal 200 in the fifth embodiment are the same as those in the first embodiment described above. Therefore, specific descriptions thereof are herein omitted. Example communication process in fifth embodiment

Next, an example communication process according to the fifth embodiment is described. FIG. 15 is an example sequence diagram of an example communication process according to the fifth embodiment. The example of FIG. 15 illustrates an example of a downlink operation.

Here, it is assumed that the terminal (UE) 200 exists in an area where the terminal (UE) 200 is communicable with not only the master base station 100-1 but also the slave base station 100-2. Further, in this embodiment, there exists the MME 300 as the higher-level device of the base stations 100-1 and 100-2.

In the following descriptions, differences from the described sequence of the communication process according to the fifth embodiment are mainly described.

A main difference between the fifth embodiment of FIG. 15 and the first embodiment described above is that the master base station 100-1 (i.e., the master base stations 100-1B in FIG. 14) receives (acquires) the CoMP-RNTI from the MME 300.

Specifically, the terminal 200 sends a request to the master base station 100-1 so that the master base station 100-1 performs the CoMP transmission with the slave base station 100-2 (step S255). After that, the master base station 100-1 sends a request for the allocation of the CoMP-RNTI to the MME 300 (step S256). After that, as described above, the MME 300 selects and allocates the CoMP-RNTI (step S257), and transmits (notifies) the allocated CoMP-RNTI to the master base station 100-1 having sent the request (step S258).

Based on the CoMP-RNTI from the MME 300, the master base station 100-1 notifies the received CoMP-RNTI to the slave base station 100-2 and terminal 200 (steps S262 and S263).

Further, the process of steps S241 through S255 and S259 through S277 of FIG. 15 is substantially similar to the above-described process of steps S01 through S35 in FIG.7; therefore the repeated descriptions thereof are herein omitted.

Example communication process in fifth embodiment  (modified example 1)

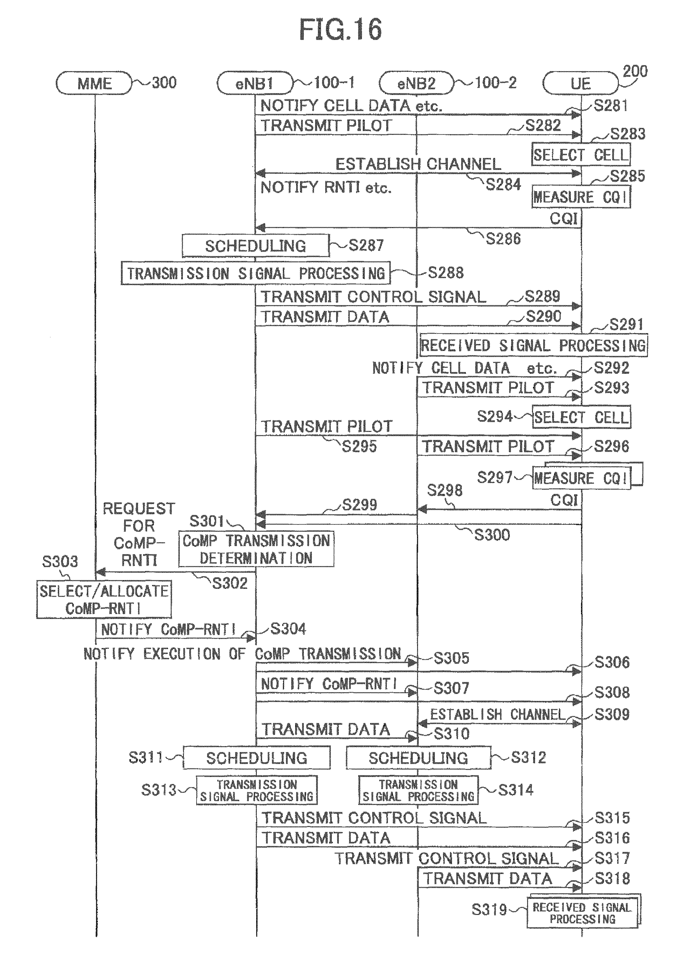

Next, another communication process according to the fifth embodiment (modified example 1) is described. FIG. 16 is another example sequence diagram of a communication process of the fifth embodiment (modified example 1).

Here, a main difference between the communication process according to the modified example 1 in FIG. 16 and the communication process in FIG. 15 in the fifth embodiment is similar to the difference between the communication process according to the modified example 1 in the first embodiment and the example communication process in FIG. 15.

Namely, in the example communication process in FIG. 15, the transmission data are separately transmitted from a higher-level device (e.g., MME 300) to master base station 100-1 and the slave base station 100-2. On the other hand, in the modified example 1, the transmission data from the higher-level device are transmitted only to the master base station 100-1.

Further, in the CQI transmission, in the example communication process in FIG. 15, only the configuration that the radio channel quality information are transmitted to each of the base stations is provided. On the other hand, in the modified example 1, the radio channel quality information reported to the slave base station 100-2 is also reported to the master base station 100-1 via a network or the like.

Further, in the example communication process in FIG. 15, when the CoMP transmission is requested, it is the terminal 200 that selects the base station that is to perform the CoMP transmission. On the other hand, in the modified example 1, it is the master base station 100-1 that  selects the base station that is to perform the CoMP transmission.

Further, the process of steps S281 through S319 in FIG. 16 is similar to the process described with reference to FIGS. 8 and 16; therefore specific descriptions thereof are herein omitted.

Example communication process in fifth embodiment (modified example 2)

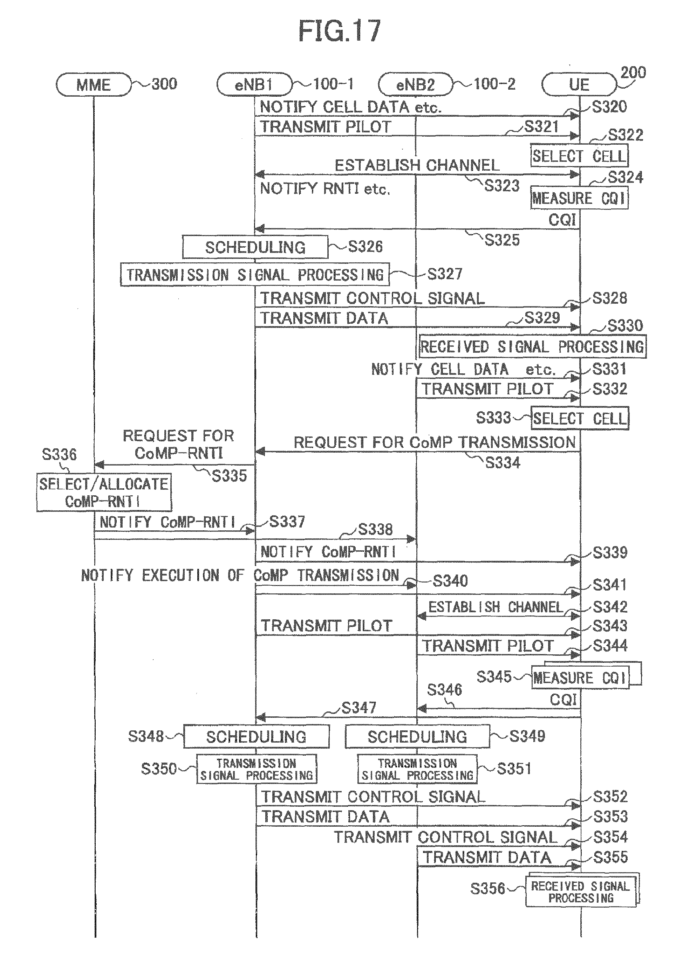

Next, another communication process according to the first embodiment (modified example 2) is described. FIG. 17 is another example sequence diagram of a communication process of the fifth embodiment (modified example 2).

A main difference between the modified example 2 in FIG. 17 and the example communication process in FIG. 15 is described. In the example communication process of FIG. 15, the MME 300 notifies the CoMP-RNTI only to the master base station 100-1, and the master base station 100-1 notifies the CoMP-RNTI to the slave base station 100-2 and the terminal 200.

On the other hand, in the modified example 2, the MME 300 notifies the CoMP-RNTI to both the master base station 100-1 and the slave base station 100-2 (steps S337 and S338). Accordingly, the master base station notifies the CoMP-RNTI only to the terminal 200 (step S339).

Further, the process of steps S320 through S356 excepting the above steps in FIG. 17 is similar to the process already described; therefore specific descriptions thereof are herein omitted.

Example communication process in fifth embodiment (modified example 3)

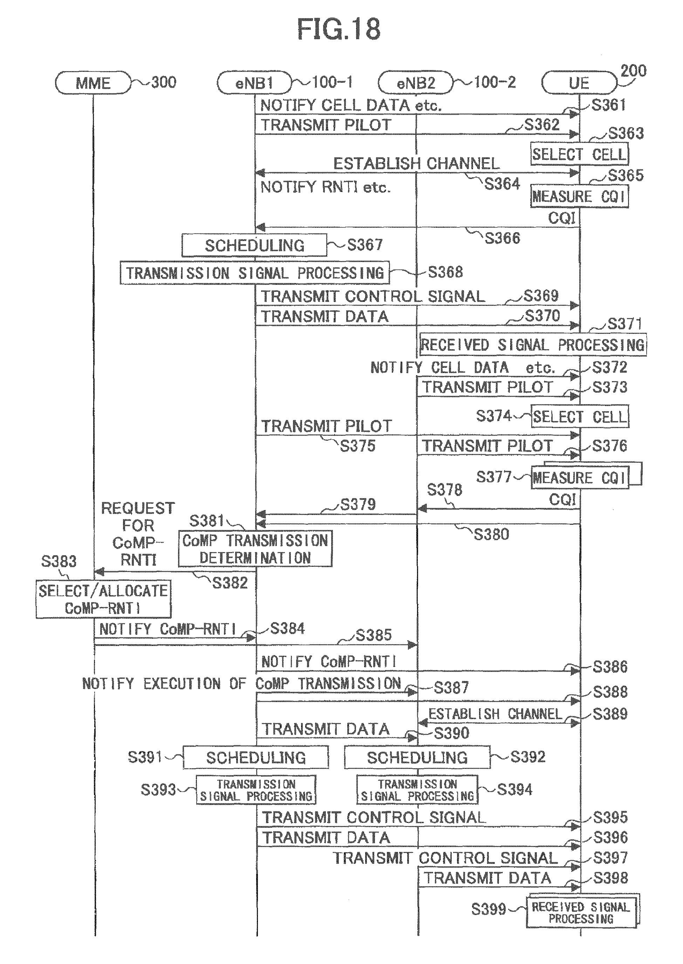

Next, another communication process according to the first embodiment (modified example 3) is described. FIG. 18 is another example sequence diagram of a communication process of the first embodiment (modified example 3).

Here, a difference between the modified example 3 of FIG. 18 and the modified example 1 of FIG. 16 is similar to that described in the above modified example 2.

Namely, in the modified example 3, the MME 300 notifies the CoMP-RNTI to both the master base station 100-1 and the slave base station 100-2 (steps S384 and S385). Accordingly, the master base station notifies the CoMP-RNTI only to the terminal 200 (step S386).

Further, the process of steps S361 through S399 excepting the above steps in FIG. 18 is similar to the process already described; therefore specific descriptions thereof are herein omitted.

Sixth embodiment

Next, a sixth embodiment is described. In the sixth embodiment, a case of uplink CoMP is described. Here, the uplink CoMP differs from the downlink CoMP described above in that the terminal performs the transmission process and the main and following base stations perform the receiving process.

Further, the uplink CoMP transmission is controlled by the main base station (master base station). Namely, another difference is that the main base station gives permission for the terminal to transmit. Further, the main base station receives the uplink pilot from each terminal, and measures and calculates the uplink radio channel quality.

Further, based on the radio channel quality, the scheduler 105 in the base station(s) according to the first embodiment selects the terminal to be allowed to transmit uplink data, a transmission method of transmitting the uplink data, and further selects the radio sources to be used in the uplink data transmission. Further, based on the selection result, the base station(s) generates and transmits the control signal to the terminal.

Further, the terminal having received the control signal encodes and modulates data based on the received control signal.

Namely, in the above first embodiment, the transmission side selects the transmission method. In the sixth embodiment, the base station which is on the receiver side selects the transmission method of the transmission from the terminal.

Further, the base station sends a request to the terminal so that the terminal transmits the pilot and the base station measures and calculates the radio channel quality. Namely, when it is determined that a terminal will perform the uplink CoMP transmission, the master base station transmits the CoMP-RNTI to the terminal.

Further, based on the transmitted CoMP-RNTI, similar to the above embodiments, the terminal calculates the initial value of the scrambling code, and generates the scrambling code. Further, based on the generated scrambling code, the terminal scrambles and transmits the transmission data.

Further, the main base station transmits the CoMP-RNTI having been transmitted to the terminal to the following base station (slave base station). Both the slave base station having received the CoMP-RNTI and the master base station having transmitted the CoMP-RNTI calculate the initial value of the scrambling code and generate the scrambling code.

Further, based on the generated scrambling code, the slave base station and the master base station descramble the data demodulated based on the radio wave transmitted by the terminal and received by the respective base stations, and decode the descrambled data to acquire the data.

Further, the selection and setting of the CoMP-RNTI, the calculation of the initial value of the scrambling code may be performed based on, for example, the descriptions in the above first through fifth embodiments.

Sixth embodiment

Example configuration of master base station 100-1

Next, an example block diagram of the master base station 100-1, the slave base station 100-2, the terminal 200 according to the sixth embodiment is described with reference to the drawings. Further, in the following description, the same reference numerals are used to describe the elements having substantially the same functions, and the specific descriptions thereof are herein omitted.

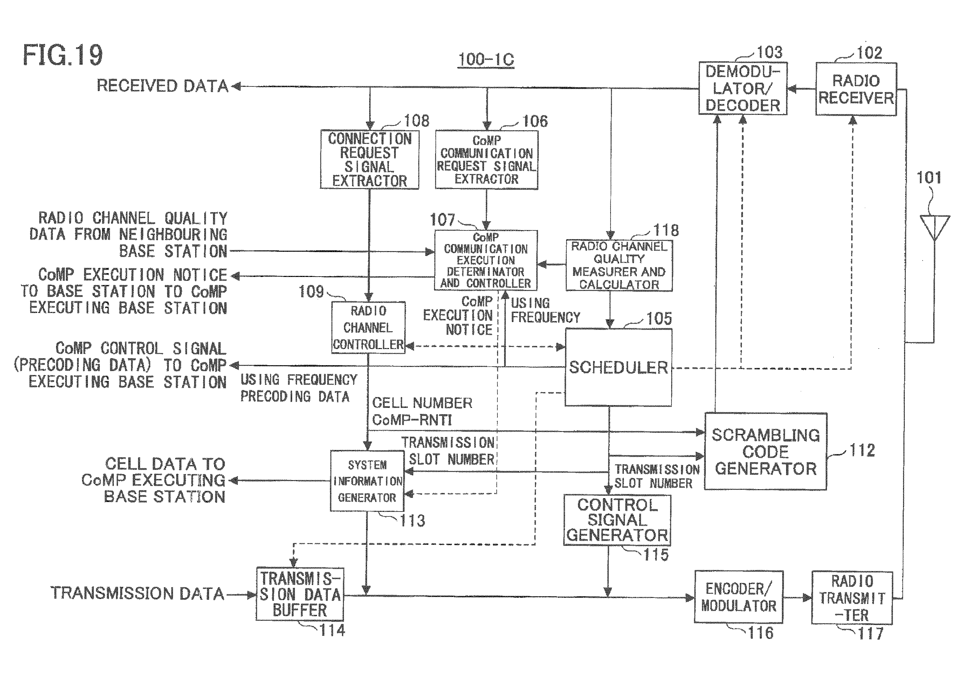

FIG. 19 illustrates an example block diagram of the master base station according to the sixth embodiment. As illustrated in FIG. 19, a master base station 100-1C includes the antenna 101, the radio receiver 102, the demodulator/decoder 103, the scheduler 105, the CoMP communication request signal extractor 106, the controller 107, the connection request signal extractor 108, the radio channel controller 109, the RNTI setter 110, the scrambling code generator 112, the system information generator 113, the transmission data buffer 114, the control signal generator 115, the encoder/modulator 116, the radio transmitter 117, and a radio channel quality information measurer and calculator 118.

In the sixth embodiment, to determine whether it is possible to perform the uplink CoMP transmission, the scheduler 105 of the master base station 100-1C performs scheduling based on a result of calculation performed by the radio channel quality information measurer and calculator 118 in FIG. 19. To that end, the scheduler 105 sends an instruction to the control signal generator 115 to generate a control signal to request the terminal 200C to transmit the pilot.

Upon receiving the instruction, the control signal generator 115 generates a pilot transmission request control signal, encodes and modulates the generated pilot transmission request control signal, and transmits the encoded and modulated pilot transmission request control signal to the terminal 200C.

Further, the master base station 100-1C receives the pilot transmitted from the terminal 200C. The radio channel quality information measurer and calculator 118 of the master base station 100-1C measures and calculates the uplink radio channel quality. The radio channel quality information measurer and calculator 118 outputs the calculation result to the controller 107.

Further, the controller 107 receives other radio channel quality which is measured and calculated by another base station (e.g., slave base station) that is reported by the master base station 100-1C. Based on the radio channel qualities, the controller 107 determines whether it is possible to perform the uplink CoMP transmission and selects the slave base station that is to receive the uplink CoMP transmission.

After that, the controller 107 notifies the performance of the uplink CoMP transmission to the radio channel controller 109, sets the CoMP-RNTI, and outputs the CoMP-RNTI to the scrambling code generator 112 and the system information generator 113.

Further, the scrambling code generator 112 generates the scrambling code, and outputs the generated scrambling code to the demodulator/decoder 103. The demodulator/decoder 103 descrambles the data from the terminal 200 to acquire (restore) the data. The following processes are the same as those in the above embodiment describing the downlink CoMP transmission; therefore the descriptions thereof are herein omitted.

Sixth embodiment:

Example configuration of slave base station 100-2

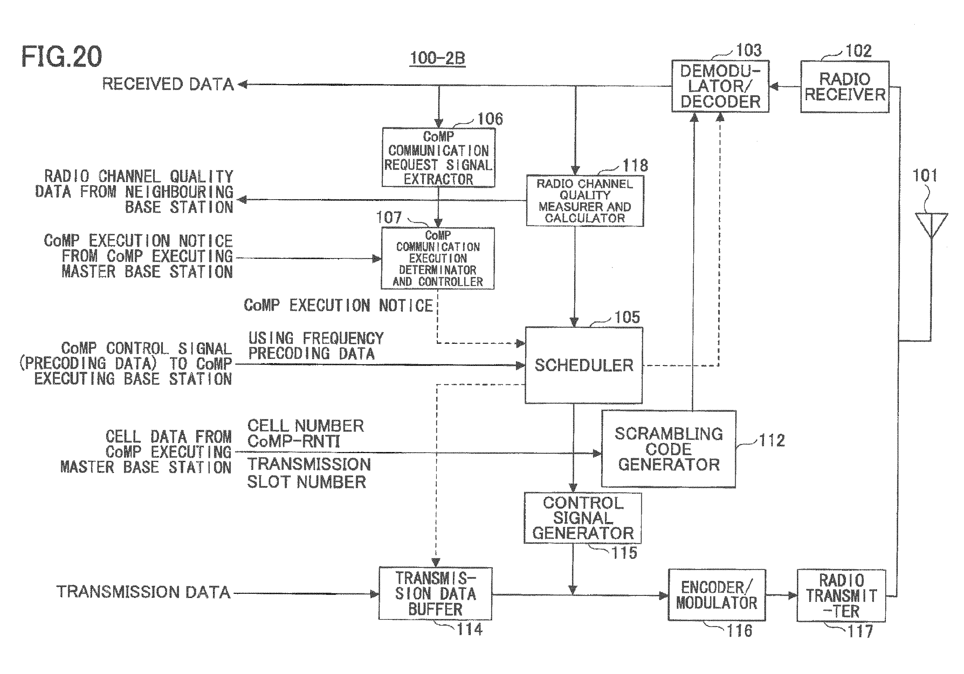

FIG. 20 illustrates an example block diagram of the slave base station according to the sixth embodiment. As illustrated in FIG. 20, a slave base station 100-2B includes the antenna 101, the radio receiver 102, the demodulator/decoder 103, the scheduler 105, the CoMP communication request signal extractor 106, the controller 107, the scrambling code generator 112, the transmission data buffer 114, the control signal generator 115, the encoder/modulator 116, the radio transmitter 117, and a radio channel quality measurer and calculator 118.

In the sixth embodiment, similar to the master base station 100-1C, the radio channel quality measurer and calculator 118 of the slave base station 100-2B measures and calculates the uplink radio channel quality. Further, in the sixth embodiment, the uplink transmission is described. Therefore, similar to the master base station 100-1C, the slave base station 100-2B receives data.

However, the slave base station 100-2B differs from the master base station 100-1C in that the radio channel quality measurer and calculator 118 of the slave base station 100-2B reports the measured and calculated radio channel quality to the master base station 100-1C via a predetermined interface (I/F) between the base stations.

Further, the scrambling code generator 112 generates the scrambling code, and outputs the generated scrambling code to the demodulator/decoder 103. The demodulator/decoder 103 descrambles the data from the terminal 200 to acquire the data.

Sixth embodiment

Example configuration of terminal 200

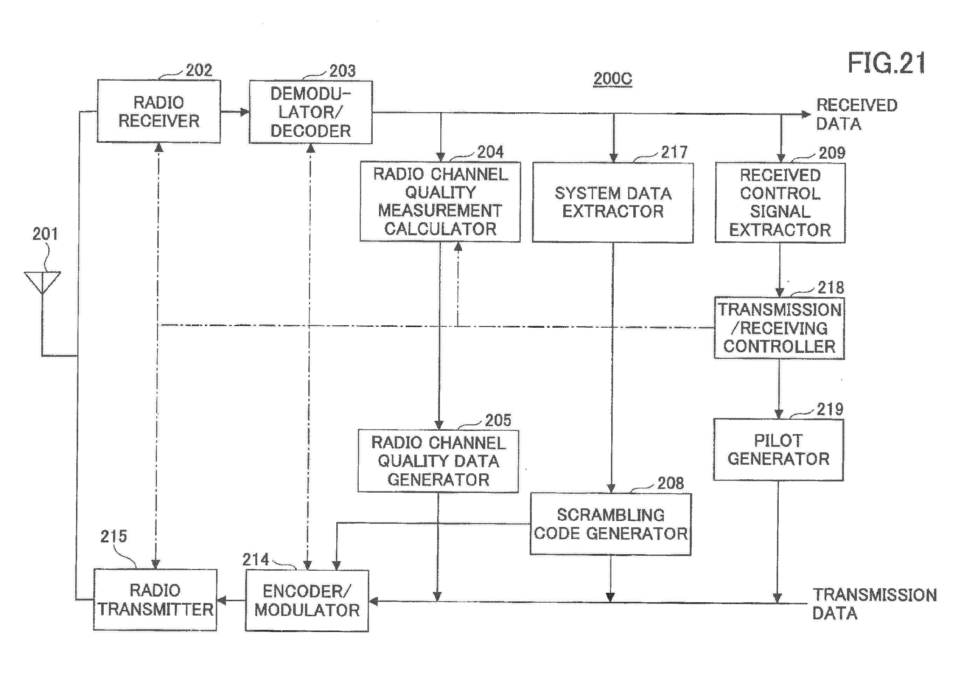

FIG. 21 illustrates an example block diagram of the terminal 200C according to the sixth embodiment.

As illustrated in FIG. 21, the terminal 200C includes an antenna 201, the radio receiver 202, the demodulator/decoder 203, the calculator 204, the radio channel quality information generator 205, the scrambling code generator 208, the received control signal extractor 209, the encoder/modulator 214, the radio transmitter 215, a system information extractor 217, a transmission/receiving controller 218, and a pilot generator 219.

The demodulator/decoder 203 of the terminal 200C demodulates and decodes a signal transmitted from the master base station 100-1C. Further, the system information extractor 217 extracts the pilot transmission request control signal based on the demodulated and decoded signal, and outputs the extracted pilot transmission request control signal to the transmission/receiving controller 218.

The transmission/receiving controller 218 sends a request to the pilot generator 219 to generate the pilot. The pilot generator 219 generates the pilot. After that, the pilot is encoded and modulated by the encoder/modulator 214 and transmitted to the master base station 100-1C and the slave base station 100-2B.

The scrambling code generator 208 generates the scrambling code to be used to scramble transmission data, and outputs the generated scrambling code to the encoder/modulator 214. The encoder/modulator 214 scrambles the transmission data using the generated scrambling code. The scrambled transmission data are transmitted to the master base station 100-1C and the slave base station 100-2B.

Example communication process in sixth embodiment

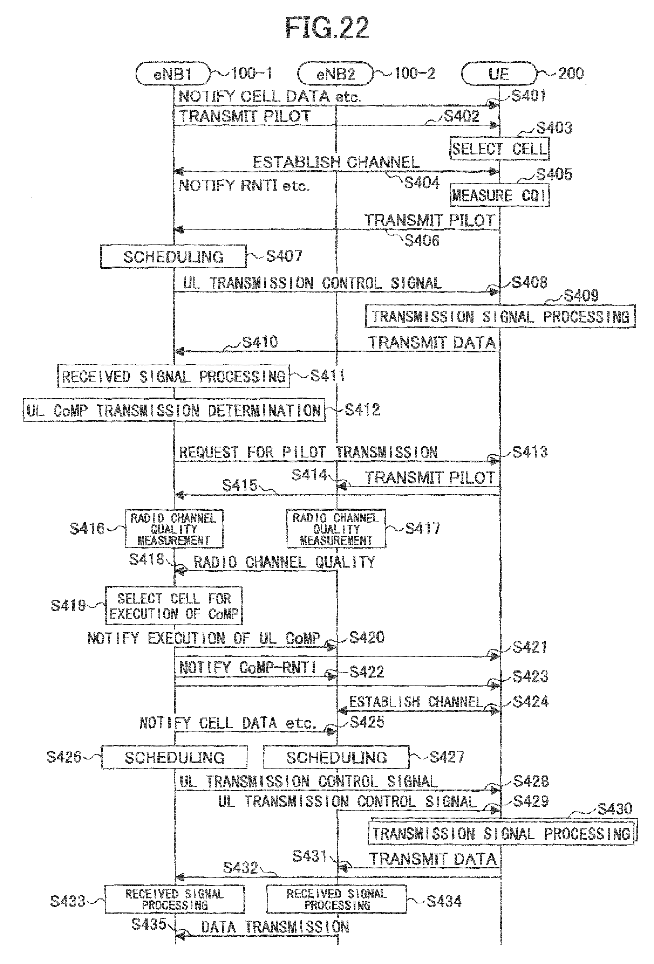

Next, an example communication process according to the sixth embodiment is described. FIG. 22 is an example sequence diagram of an example communication process according to the sixth embodiment. FIG. 22 illustrates an example communication process where the master base station 100-1 determines whether it is possible to perform the uplink (UL) CoMP transmission.

Further, it is assumed that the terminal (UE) 200 (200C) is located in an area where the terminal 200C is communicable with both the master base station (eNB1) 100-1 (master base station 100-1C) and the slave base station (eNB2) 100-2 (slave base station 100-2B).

Further, the process of steps S401 through S407 of FIG. 22 is similar to that in the above embodiments; therefore the repeated descriptions thereof are herein omitted.

After the scheduling in the process of step S407, the master base station 101-1 transmits the uplink (UL) transmission control signal (UL transmission control signal) to the terminal 200 (step S408).

Upon receiving the UL transmission control signal, the terminal 200 performs the transmission signal processing (step S409), and transmits the transmission data to the master base station 100-1 (step S410). After that, the master base station 100-1 determines whether it is possible (desirable) to perform the Uplink CoMP transmission (UL CoMP transmission) (step S412), and performs the terminal transmission signal processing (step S411). Further, the master base station 100-1 transmits the pilot transmission request to the terminal (step S413).

Based on the pilot transmission request from the master base station 100-1, the pilot generator 219 of the terminal 200 generates the pilot, and transmits the generated pilot to the master base station 100-1 and the slave base station 100-2 (steps S414 and S415).

Next, the master base station 100-1 and the slave base station 100-2 perform respective radio channel quality measurements (steps S416 and S417). Further, the slave base station 100-2 transmits the radio channel quality (e.g., CQI) to the master base station 100-1. The master base station 100-1 select the cell where the CoMP transmission is to be performed based on the radio channel qualities acquired in steps S416 and S418.

After that, the master base station 100-1 notifies the performance of the uplink CoMP transmission to the base station where the uplink CoMP transmission is to be performed (e.g., slave base station 100-2 "target base station") and the terminal 200 (steps S420 and S421). Further, the master base station 100-1 notifies the CoMP-RNTI to the base station where the uplink CoMP transmission is to be performed (e.g., slave base station 100-2) and the terminal 200 (steps S422 and S423).

Based on the notice, the slave base station 100-2 and the terminal 200 establish the line with each other (therebetween) (step S424). Further, the master base station 100-1 reports the cell data and the like to the slave base station 100-2 (step S425).

After that, the master base station 100-1 and the slave base station 100-2 perform scheduling (steps S426 and S427), and transmits the generated respective UL transmission control signals to the terminal 200 (steps S428 and S429). The terminal 200 performs the transmission signal processing (e.g., scrambling) based on the UL transmission control signals (step S430), and transmits the transmission data to the master base station 100-1 and the slave base station 100-2.

Further, the master base station 100-1 and the slave base station 100-2 having received the data from the terminal perform respective received signal processing (e.g., descrambling) (steps S433 and S434). Further, the slave base station 100-2 transmits the received-signal-processed data and the like to the master base station 100-1 (step S435).

Example communication process in sixth embodiment (modified example 1)

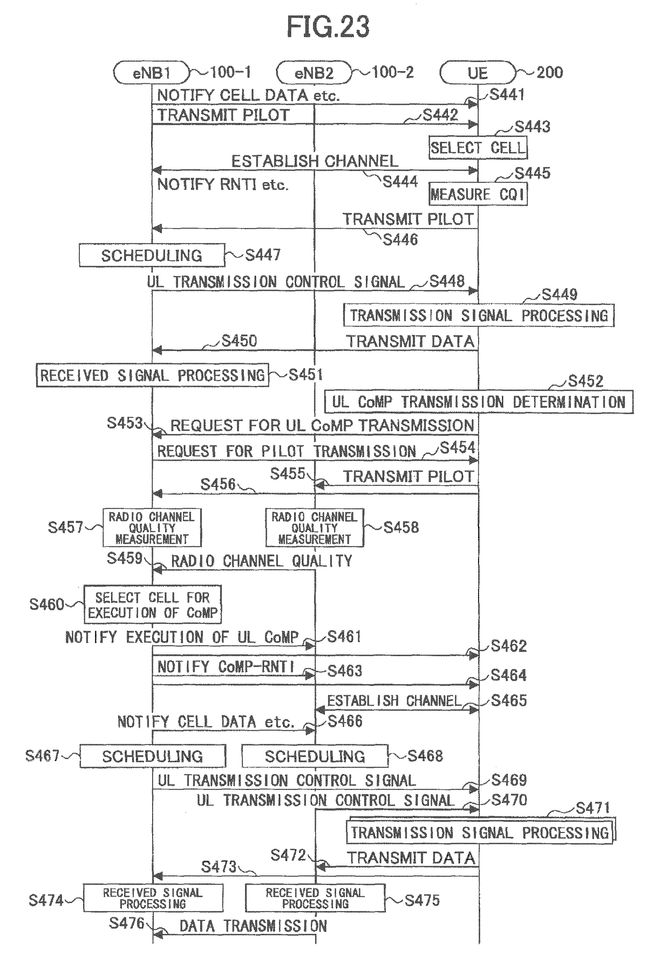

Next, another communication process according to the sixth embodiment (modified example 1) is described. FIG. 23 is an example sequence diagram of an example communication process (modified example 1) according to the sixth embodiment. FIG. 23 illustrates an example communication process where the terminal 200 determines whether it is possible to perform the uplink (UL) CoMP transmission. In the following, differences between the communication process according to this modified example 1 and the communication process of FIG. 22 are described.

In the modified example 1 of FIG. 23, after transmitting the data (step S450), the terminal 200 determines whether it is possible to perform the uplink (UL) CoMP transmission (step S452). Further, after the determination, the terminal 200 outputs an uplink CoMP transmission request to the target base station (e.g., the master base station 100-1) (step S453).

Further, the process of steps S441 through S476 of FIG. 23 excepting the process in above steps is substantially the similar as an example communication process in the above embodiment (e.g., that in the sixth embodiment); therefore the repeated descriptions thereof are herein omitted.

Example communication process in sixth embodiment (modified example 2)

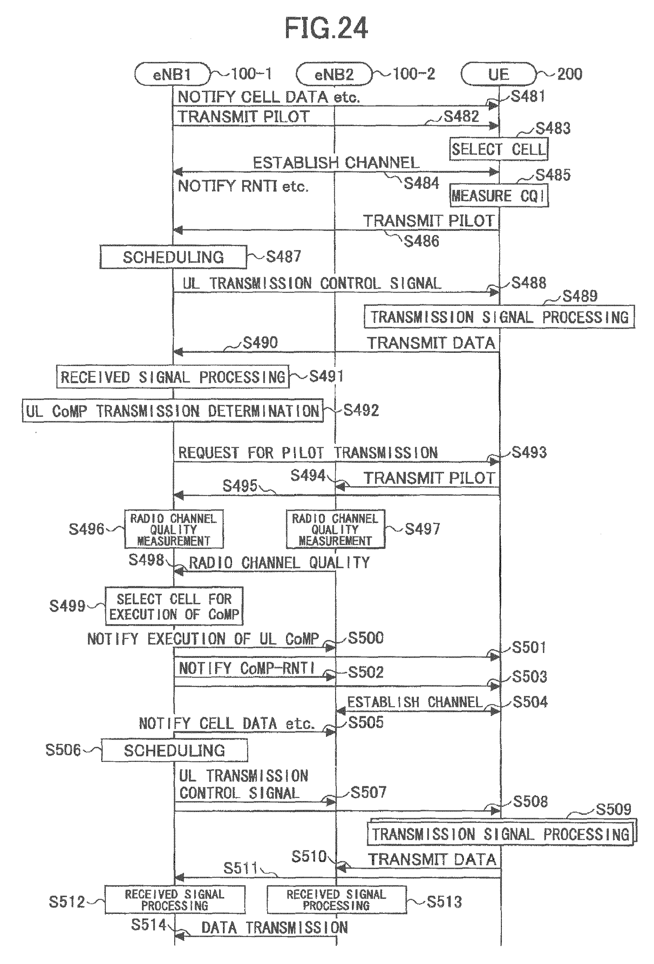

Next, another communication process according to the sixth embodiment (modified example 2) is described. FIG. 24 is an example sequence diagram of an example communication process (modified example 2) according to the sixth embodiment.

FIG. 24 illustrates an example communication process where the master base station 100-1 determines whether it is possible to perform the uplink (UL) CoMP transmission. Further, only the master base station 100-1 performs the scheduling. In the following, differences between the communication process according to this modified example 2 and the communication process of FIG. 22 are described.

After the scheduling in step S506, the master base station 101-1 transmits the UL transmission control signal to the slave base station 100-2 and terminal 200 (steps S507 and S508). Based on the received UL transmission control signal, the terminal 200 performs the transmission signal processing on the transmission data (step S509), and transmits the processed transmission data to the master base station 100-1 and the slave base station 100-2 (steps S510 and 511).

Further, the process of steps S481 through S514 of FIG. 24 excepting the process in above steps is substantially the similar as an example communication process in the above embodiments; therefore the repeated descriptions thereof are herein omitted.

Seventh embodiment

Next, a seventh embodiment is described. In the seventh embodiment, an offset term is added to the formula according to the fourth embodiment.

For example, it is desired that the scrambling code for the CoMP transmission generated based on the initial value calculated by the above formula (6), the scrambling code for the PDSCH, and the scrambling code for the PMCH have mutually no correlation with (or orthogonal to) each other. However, the gold codes, which are scrambling codes, have completely no correlation with each other. Namely, for example, depending on a combination of the initial values, correlation may be generated, which may cause interference.

To avoid the problem, it is desired to change (shift) the scrambling code for the CoMP transmission so that the above three scrambling codes (for CoMP, PDSCH, and PMCH) have mutually no correlation with each other or the change of the scrambling code for the CoMP may near a state where the scrambling code for CoMP has no correlation with the other two scrambling codes for PDSCH and PMCH.

Namely, in the seventh embodiment, as described above, by changing the scrambling code for CoMP transmission so as to have no correlation with other scrambling codes, it may become possible to reduce the interferences. As a result, the transmission characteristics may be improved.

Further, the interferences include the interference that is applied to other transmissions (channels) and the interferences that are received from the other transmission (channels). Therefore, if the transmission characteristics of the CoMP transmission may be improved, the transmission characteristics of normal data transmissions and MBMS data transmissions may also be improved.

In the seventh embodiment, an offset for the CoMP is selected so that the scrambling code for CoMP transmission has no correlation with other scrambling codes (i.e., the interferences may be reduced). To that end, as illustrated in the following formula (7), a term for offset is added to the above formula (6).

$$c_{\text{init}} = n_{\text{CoMP-RNTI}} \cdot 2^{14} + q \cdot 2^{13} + CoMP\_offset \quad \cdot \cdot \cdot \; ( \; 7 \; )$$

By doing this, it may become possible to reduce the interferences with the PDSCH transmitted using a normal transmission method and the PMCH. As a result, in the seventh embodiment, it may become possible to improve the transmission quality of the CoMP and the transmission quality of the PDSCH and PMCH.

Further, the offset (i.e., "CoMP_offset" in formula (7)) may be set as a variable in the base station and reported to the terminal. Otherwise, the offset may be a fixed value as the radio communication system and stored (shared) among the base stations and the terminal. Otherwise, the offset ("CoMP-offset") may be notifies from the base station to the terminal as the system information.

Further, in the seventh embodiment, hereinafter, the scrambling code to be used in the scrambling to be performed on the PDSCH transmitting the dedicated data is simplified as "code 1"; the scrambling code to be used in the scrambling to be performed on the PMCH transmitting the MBMS data is simplified as "code 2"; and the scrambling code to be used in the scrambling to be performed on the CoMP transmission is simplified as "code 3".

Further, in the seventh embodiment, it is desired that those three codes (codes 1, 2, and 3) have mutually no correlation (i.e., orthogonal) with each other and those three codes may be easily distinguished from each other.

However, actually, such correlation may be generated, and which may cause mutual interference. As a result, those scrambling codes interference with each other. To reduce the interferences (namely, to generate the scrambling code which may cause less interferences), the initial value is selected.

As a method of selecting the initial value, for example, the code 3 may be selected which may reduce the correlation between the scrambling performed in the CoMP transmission and the others, the offset is set in advance so that such a code 3 may be generated, and by doing this, the above three codes (i.e., the codes 1, 2, and 3) are set.

Further, in the seventh embodiment, for example, the CoMP transmission number "$CoMP_{number}$" may be set as transmission identification data to distinguish one transmission group from another, the transmission group being difference data simultaneously or intermittently transmitted from a plurality of base stations to one terminal, and the following formula (8) may be used as the "$CoMP_{number}$", or the following formula (8) may alternatively be used.

$$c_{init} = n_{CoMP\text{-}RNTI} \cdot 2^{14} + q \cdot 2^{13} + CoMP_{number} \quad \cdot \cdot \cdot (8)$$

Further, in the seventh embodiment, as described in the above first embodiment, when the CoMP-RNTI is set, by using the CoMP-RNTI including the offset ("CoMP-RNTI2"), it may become possible to reduce (remove) the correlation with other codes. In this case, the following formulas (9) and (10) are used.

$$c_{init} = n_{CoMP\text{-}RNTI2} \cdot 2^{14} + q \cdot 2^{13} \quad \cdot \cdot \cdot (9)$$

$$c_{init} = n_{CoMP\text{-}RNTI2} \cdot 2^{14} \quad \cdot \cdot \cdot (10)$$

Seventh embodiment

Example configuration of master base station 100-1

Next, an example block diagram of the master base station 100-1 according to the seventh embodiment is described. Further, in the following description, the same reference numerals are used to describe the elements having substantially the same functions as those in the master base station 100-1 of FIG. 2, and the specific descriptions thereof are herein omitted.

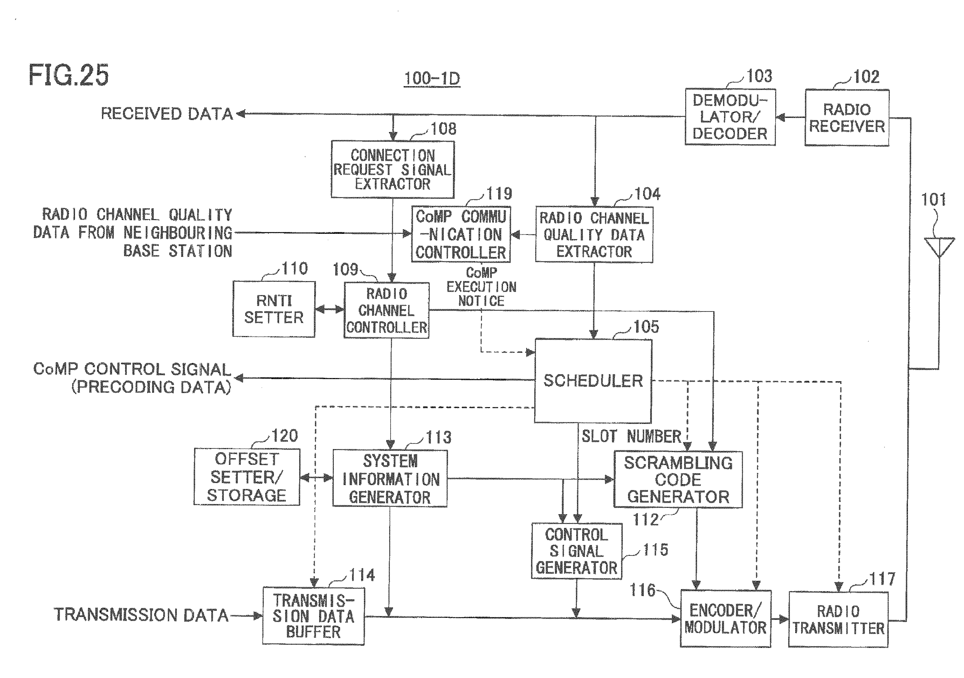

FIG. 25 illustrates an example block diagram of the master base station according to the seventh embodiment. As illustrated in FIG. 25, a master base station 100-1D includes the antenna 101, the radio receiver 102, the demodulator/decoder 103, the radio channel quality information extractor 104, the scheduler 105, the connection request signal extractor 108, the radio channel controller 109, the RNTI setter 110, the scrambling code generator 112, the system information generator 113, the transmission data buffer 114, the control signal generator 115, the encoder/modulator 116, the radio transmitter 117, a CoMP communication controller 119, and an offset setter/storage 120.

In the master base station 100-1D of FIG. 25, the CoMP communication controller 119 controls the performance of the CoMP transmission based on the radio channel quality information acquired from the radio channel quality information extractor 104 and the radio channel data acquired from other base station(s) (neighbouring base stations). When the CoMP is executed, the CoMP communication controller 119 outputs the notice of performing the CoMP to the scheduler 105.

Further, the radio channel controller 109 acquires the CoMP-RNTI and the like from the RNTI setter 110 based on the connection request signal from the connection request signal extractor 108, and outputs the acquired CoMP-RNTI and the like to the system information generator 113.

Further, in the seventh embodiment, it is assumed that the CoMP-RNTI and the like are set in the RNTI setter 110. However, the present invention is not limited to this configuration. For example, as described above, the CoMP-RNTI may be acquired by the CoMP-RNTI setter 111.

Further, the offset setter/storage 120 sets and stores the (above-described) offset. The system information generator 113 acquires offset data from the offset setter/storage 120, and outputs the acquired offset data to the scrambling code generator 112. By doing this, the scrambling code generator 112 generates the scrambling code for CoMP transmission using the offset. Therefore, in the seventh embodiment, for example, it may become possible to generate the scrambling code having less correlation with other scrambling codes.

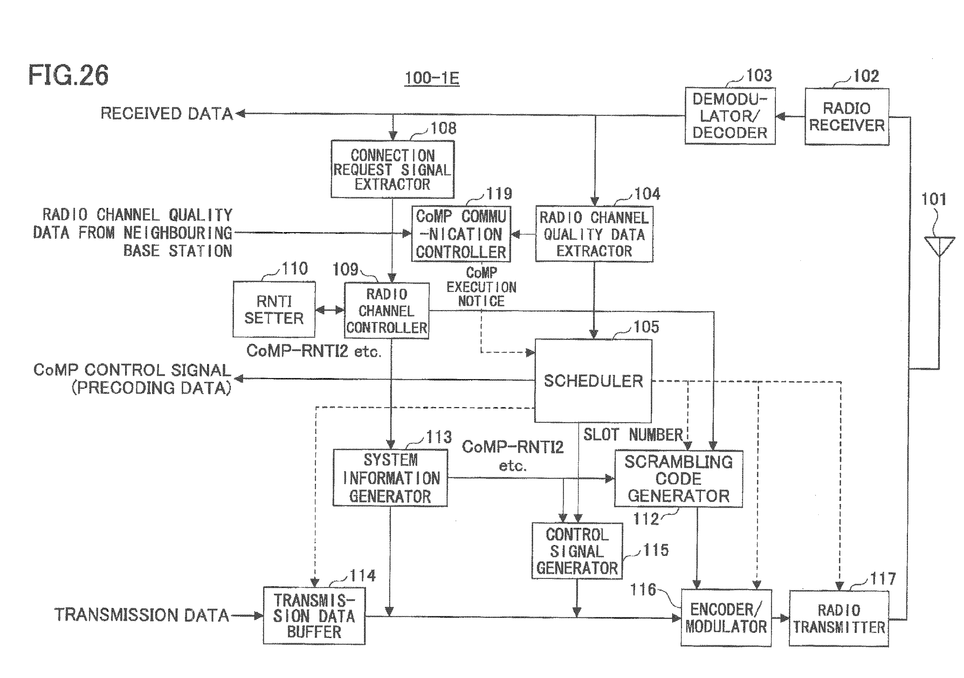

Further, FIG. 26 illustrates an example block diagram of the master base station according to the seventh embodiment (modified example 1). As illustrated in FIG. 26, a master base station 100-1E includes the antenna 101, the radio receiver 102, the demodulator/decoder 103, the radio channel quality information extractor 104, the scheduler 105, the connection request signal extractor 108, the radio channel controller 109, the RNTI setter 110, the scrambling code generator 112, the system information generator 113, the transmission data buffer 114, the control signal generator 115, the encoder/modulator 116, the radio transmitter 117, and the CoMP communication controller 119.

In the master base station 100-1E of FIG. 26, the radio channel controller 109 acquires the CoMP-RNTI including the offset ("CoMP-RNTI2") from the RNTI setter 110. By doing this, the scrambling code generator 112 may generate the scrambling code using the CoMP-RNTI including the offset ("CoMP-RNTI2"), the scrambling code having substantially no correlation with other scrambling codes.

Seventh embodiment

Example configuration of terminal 200D

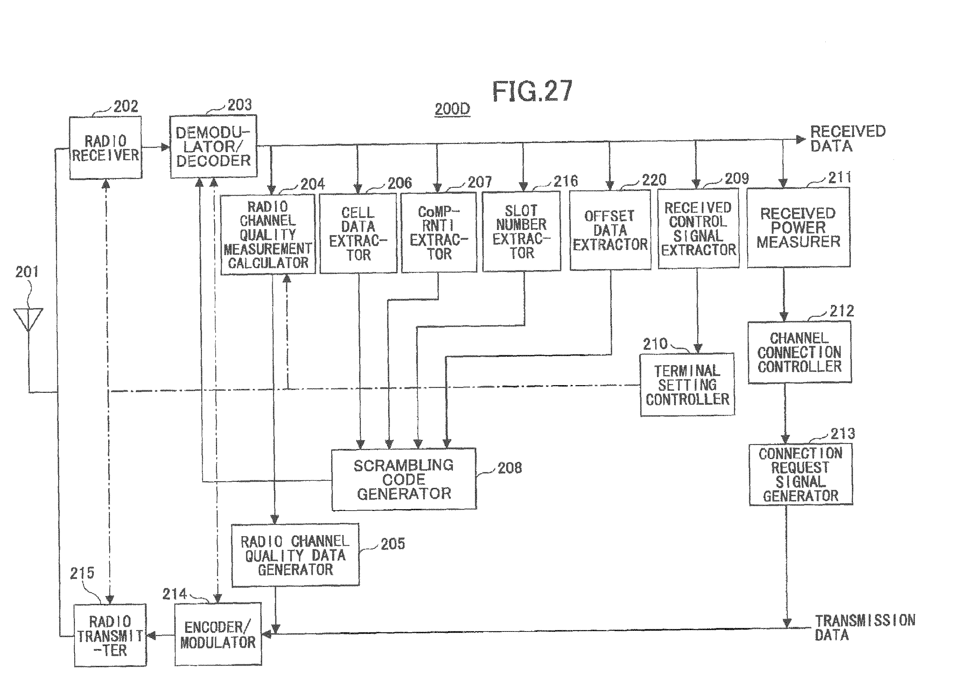

Next, an example configuration of a terminal according to a seventh embodiment is described. FIG. 27 illustrates an example block diagram of the terminal 200D according to the seventh embodiment. In FIG. 27, the same reference numerals are used to describe substantially the same elements as those in the terminal 200B of FIG. 5, and specific descriptions thereof are herein omitted.

As illustrated in FIG. 27, the terminal 200D includes an antenna 201, the radio receiver 202, the demodulator/decoder 203, the calculator 204, the radio channel quality information generator 205, the cell data extractor 206, the CoMP-RNTI extractor 207, the scrambling code generator 208, the received control signal extractor 209, the terminal setting controller 210, the received power measurer 211, the channel connection controller 212, the connection request signal generator 213, the encoder/modulator 214, the radio transmitter 215, a slot number extractor 216, and an offset data extractor 220.

Here, in comparison with the terminal 200B according to the first embodiment (modified example 1), the terminal 200D of FIG. 27 further includes the offset data extractor 220.

The offset data extractor 220 extracts the offset data from the received signal output from the demodulator/decoder 203. Further, the offset data extractor 220 outputs the extracted offset data to the scrambling code generator 208.

By doing this, based on the cell data (including, for example, the cell number, CoMP-RNTI, slot number, and offset data) the scrambling code generator 208 generates the initial value of the scrambling code, and sequentially generates the scrambling code. The scrambling code generator 208 outputs the generated scrambling code to the demodulator/decoder 203. By using the received scrambling code from the scrambling code generator 208, the demodulator/decoder 203 descrambles the received data.

As described above, in the seventh embodiment, the scrambling code is generated by using the offset data. Accordingly, the generated scrambling code is more likely to have less correlation with other scrambling codes. As a result, the interferences may be reduced, and transmission characteristics may be improved. Example communication process in seventh embodiment

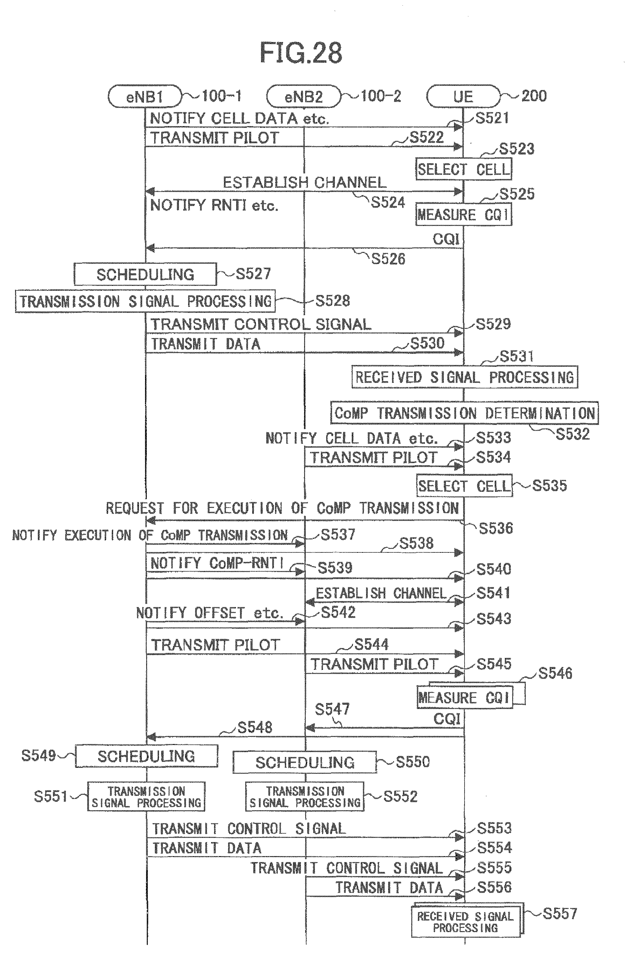

Next, an example communication process according to the seventh embodiment is described. FIG. 28 is an example sequence diagram of an example communication process according to the seventh embodiment. FIG. 28 illustrates an example communication process in downlink.

Further, it is assumed that the terminal (UE) 200 (200D) is located in an area where the terminal 200D is communicable with both the master base stations (eNB1) 100-1 (master base stations 100-1D and 100-1E) and the slave base station (eNB2) 100-2.

Further, in the following, a main difference from the example communication process according to the first embodiment is described.

A main difference between the seventh embodiment of FIG. 28 and the first embodiment is that the offset and the like are notifies from the master base station 100-1 to the slave station 100-2 and the terminal 200 (steps S542 and S543).

By doing this, in the seventh embodiment, by using the offset so that the scrambling code for the CoMP transmission has no correlation with the other scrambling codes, the interferences may be reduced and the transmission characteristics may be improved accordingly.

The process of steps S521 through S557 excepting the above steps in FIG. 28 is substantially the same as the process in the above embodiments (e.g., the first embodiment). Therefore, the specific descriptions thereof are herein omitted.

Example communication process in seventh embodiment (modified example 1)

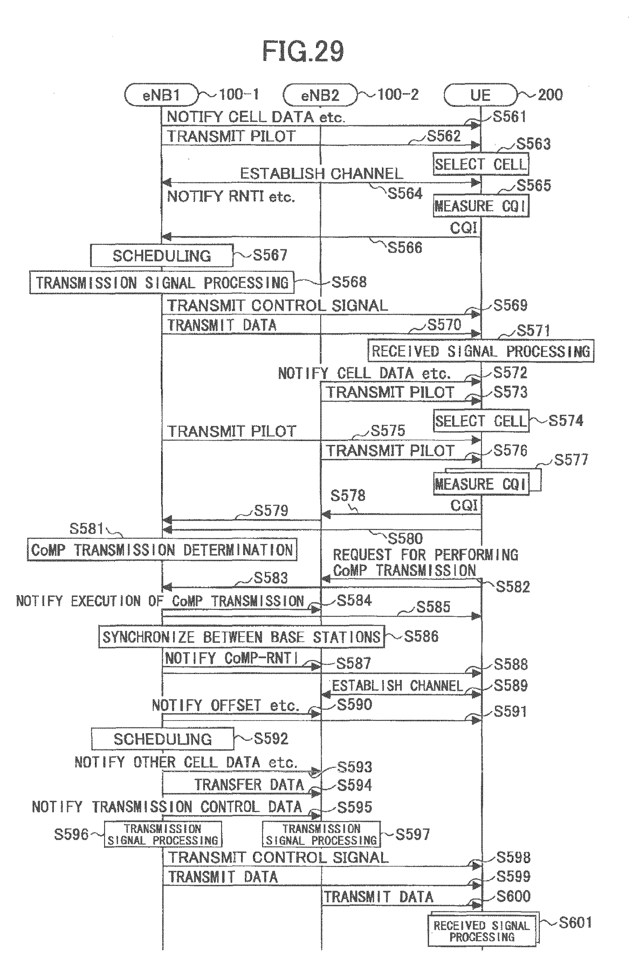

Next, another communication process according to the seventh embodiment (modified example 1) is described. FIG. 29 is an example sequence diagram of an example communication process (modified example 1) according to the seventh embodiment.

Further, in the following, a main difference from the example communication process according to the first embodiment is described.

In the seventh embodiment (modified example 1) of FIG. 29, in the communication procedure where the base stations are synchronized with each other in the first embodiment (modified example 5), the offset and the like are notified from the master base station 100-1 to the slave base station 100-2 and the terminal 200 (steps S590 and S591).

In the process of steps S561 through S601 excepting the above steps in FIG. 29 are substantially the same as the process in the above embodiments (e.g., the first embodiment (modified example 5)). Therefore, the specific descriptions thereof are herein omitted.

Example communication process in seventh embodiment (modified example 2)

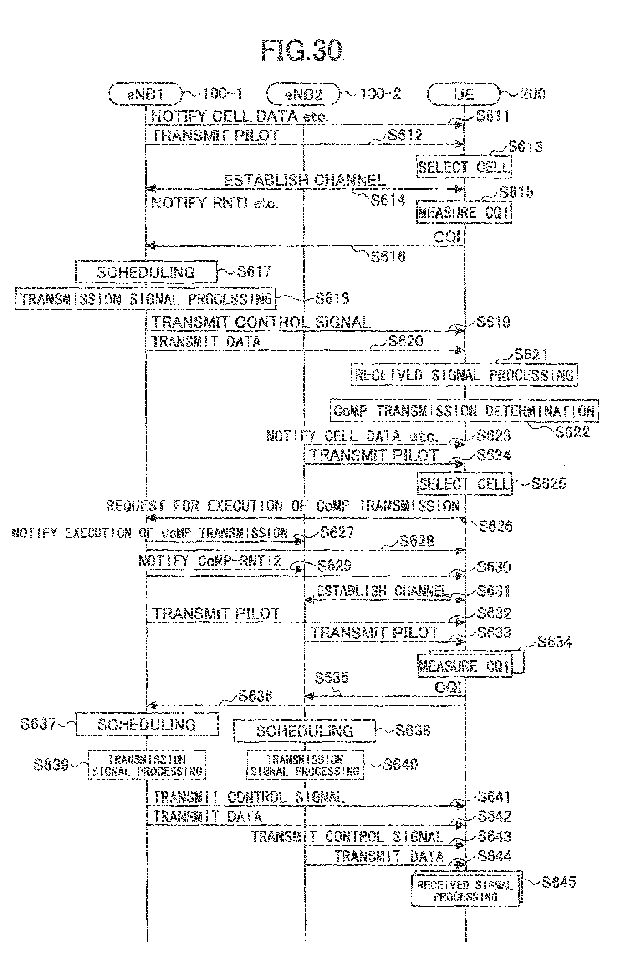

Next, another communication process according to the seventh embodiment (modified example 2) is described. FIG. 30 is an example sequence diagram of an example communication process (modified example 2) according to the seventh embodiment.

A main difference between the seventh embodiment (modified example 2) of FIG. 30 and the first embodiment is that the CoMP-RNTI including the offset ("CoMP-RNTI2") is notified from the master station 100-1 to the slave base station 100-2 and the terminal 200 (steps S629 and S630).

By doing this, in the seventh embodiment, by using the CoMP-RNTI including the offset so that the scrambling code for the CoMP transmission has no correlation with the other scrambling codes, the interferences may be reduced and the transmission characteristics may be improved accordingly.

The process of steps S611 through S645 excepting the above steps in FIG. 30 is substantially the same as the process in the above embodiments (e.g., the first embodiment). Therefore, the specific descriptions thereof are herein omitted. Example communication process in seventh embodiment (modified example 3)

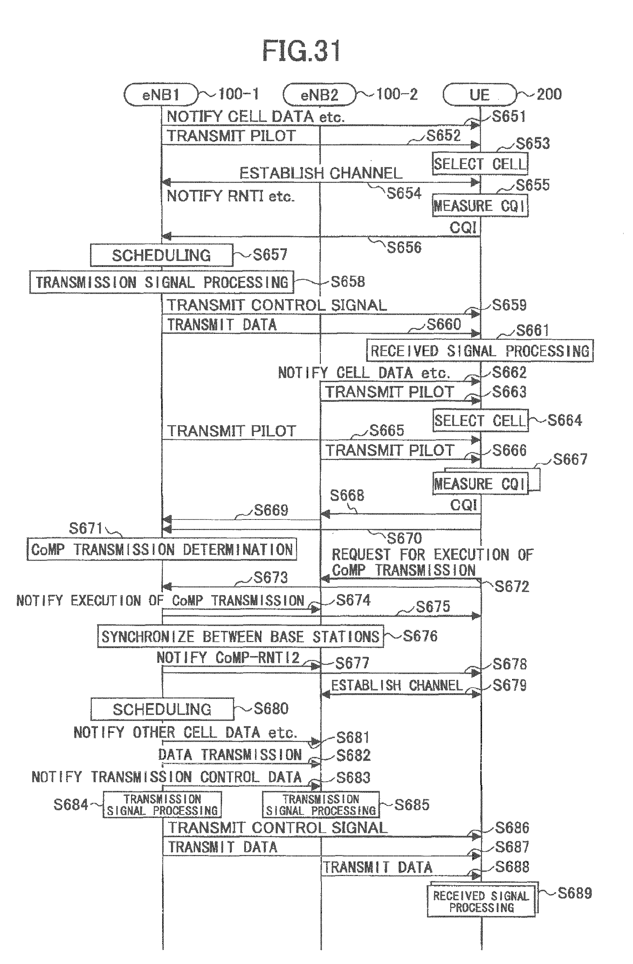

Next, another communication process according to the seventh embodiment (modified example 3) is described. FIG. 31 is an example sequence diagram of an example communication process (modified example 3) according to the seventh embodiment.

Further, in the following, a main difference from the example communication process according to the first embodiment is described.

In the seventh embodiment (modified example 3) of FIG. 31, in the communication procedure where the base stations are synchronized with each other in the first embodiment (modified example 5), the CoMP-RNTI including the offset ("CoMP-RNTI2") is notified from the master base station 100-1 to the slave base station 100-2 and the terminal 200 (steps S677 and S678).

The process of steps S651 through S689 excepting the above steps in FIG. 31 is substantially the same as the process in the above embodiments (e.g., the first embodiment (modified example 5)). Therefore, the specific descriptions thereof are herein omitted.

Eighth embodiment

Next, an eighth embodiment is described. In the eighth embodiment, for example, the offset is added based on an initial value calculation formula for the PDSCH transmission.

In the above seventh embodiment, an offset is provided in (added to) the initial value of the scrambling code so that the correlation of the scrambling code for the CoMP relative to the scrambling codes for PDSCH and PMCH is reduced.

In the eighth embodiment, for example, as indicated in the following formula (11), the offset term "CoMP_offset2" is added to the formula for calculating the initial value of the scrambling code for the PDSCH. By doing this, in the eighth embodiment, the initial value may be calculated so that the generated scrambling code for the CoMP has less correlation with other scrambling codes than a scrambling code calculated generated without using the offset term.

$$c_{\text{init}} = n_{\text{RNTI}} \cdot 2^{14} + q \cdot 2^{13} + \lfloor n_s/2 \rfloor \cdot 2^9 + N_{\text{ID}}^{\text{cell}} + CoMP\_offset_2 \quad \cdots (1\ 1)$$

By doing this, it may become possible to generate the scrambling code for CoMP having less correlation with the scrambling codes for other PDSCH and PMCH.

Here, as an apparatus configuration of the base station according to the eighth embodiment, the master base station 100-1D of FIG. 25 and the like may be used. In this case, the radio channel controller 109 extracts the RNTI, the cell ID and the like from the RNTI setter 110, and outputs the extracted data to the system information generator 113.

The system information generator 113 acquires the offset from the offset setter/storage 120, and outputs the RNTI, Cell ID, offset and the like to the scrambling code generator 112. By doing this, the scrambling code generator 112 may generate the scrambling code by including the offset in the initial value of the scrambling code using the offset.

Example communication process in eighth embodiment

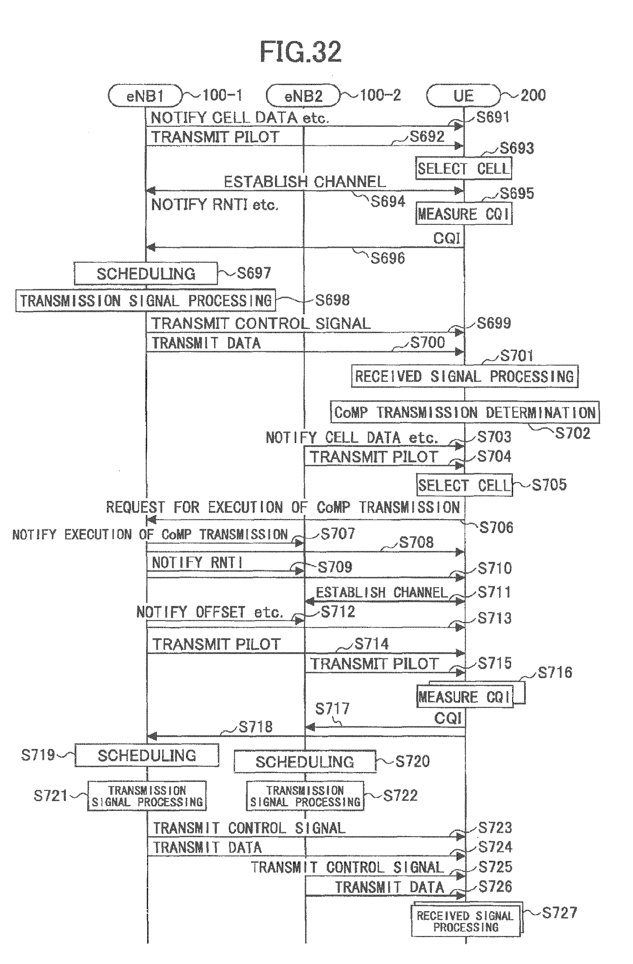

Next, an example communication process according to the eighth embodiment is described. FIG. 32 is an example sequence diagram of an example communication process according to the eighth embodiment. FIG. 32 illustrates an example communication process in downlink. Further, it is assumed that the terminal (UE) 200 (200D) is located in an area where the terminal 200D is communicable with both the master base stations (eNB1) 100-1 (master base stations 100-1D and 100-1E) and the slave base station (eNB2) 100-2.

Further, in the following, a main difference from the example communication process according to the seventh embodiment is described. In FIG. 32, the master base station 100-1 notifies the RNTI and the like to the slave base station 100-2 and the terminal 200 (steps S709 and S710), and then, further notifies the offset and the like (steps S712 and S713).

The process of steps S691 through S727 excepting the above steps in FIG. 32 is substantially the same as the process in the above embodiments (e.g., the seventh embodiment). Therefore, the specific descriptions thereof are herein omitted.

Example communication process in eighth embodiment (modified example 1)

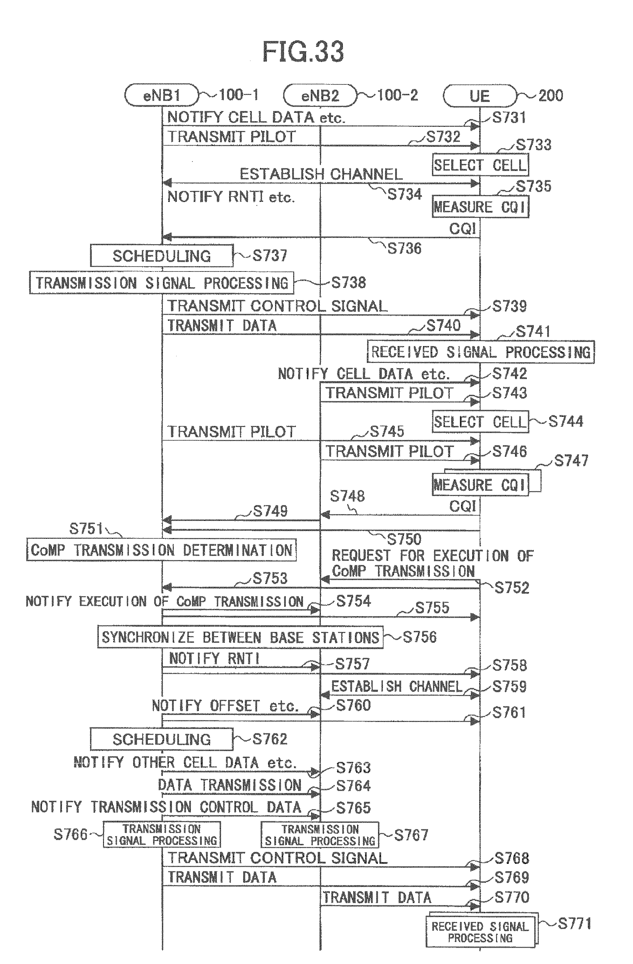

Next, another communication process according to the eighth embodiment (modified example 1) is described. FIG. 33 is an example sequence diagram of an example communication process (modified example 1) according to the eighth embodiment.

Further, in the following, a main difference from the example communication process according to the seventh embodiment (modified example 1) is described.

In the eighth embodiment (modified example 1) of FIG. 33, the master base station 100-1 notifies the RNTI and the like to the slave base station 100-2 and the terminal 200 (steps S757 and S758), and then, further notifies the offset and the like (steps S760 and S761).

In the process of steps S731 through S771 excepting the above steps in FIG. 33 are substantially the same as the process in the above embodiments (e.g., the seventh embodiment (modified example 1)). Therefore, the specific descriptions thereof are herein omitted.

By doing this, in the eighth embodiment, by using the offset so that the scrambling code may be generated to have less correlation with other scrambling codes, the interferences may be reduced and accordingly, the transmission characteristics may be improved.

Ninth embodiment

Next, a ninth embodiment is described. In the ninth embodiment, the term of the "cell ID" is removed from and an offset is added to the formula for calculating the initial value of the scrambling code. Namely, in the ninth embodiment, the physical cell ID is removed from the initial value calculation formula. Further, to reduce the correlation similar to the above embodiments, as illustrated in the following formula (12), the offset term "CoMP_offset$_3$" is added.

$$c_{\text{init}} = n_{\text{RNTI}} \cdot 2^{14} + q \cdot 2^{13} + \lfloor n_s/2 \rfloor \cdot 2^9 + CoMP\_offset_3 \quad \cdots (1\ 2)$$

By doing this, it may become possible to generate the scrambling code for CoMP having less correlation with the scrambling codes for other PDSCH and PMCH.

Here, as an apparatus configuration of the base station according to the ninth embodiment, the master base station 100-1D of FIG. 25 and the like may be used. However, the configuration according to ninth embodiment is not limited to this configuration. In this case, the radio channel controller 109 extracts the RNTI and the like from the RNTI setter 110, and outputs the extracted data to the system information generator 113. Namely, in the ninth embodiment, the "cell ID" is not notified.

Tenth embodiment

Next, a tenth embodiment is described. In the tenth embodiment, the term of the "slot number" is removed from and an offset is added to the formula for calculating the initial value of the scrambling code.

Namely, in the tenth embodiment, the slot number is removed from the initial value calculation formula. Further, to reduce the correlation similar to the above embodiments, as illustrated in the following formula (13), the offset term "CoMP_offset$_4$" is added.

$$c_{\text{init}} = n_{\text{RNTI}} \cdot 2^{14} + q \cdot 2^{13} + N_{\text{ID}}^{\text{cell}} + CoMP\_offset_4 \quad \cdot \cdot \cdot (1\,3)$$

By doing this, it may become possible to generate the scrambling code for CoMP having less correlation with the scrambling codes for other PDSCH and PMCH.

Here, as an apparatus configuration of the base station according to the tenth embodiment, the master base station 100-1D of FIG. 25 and the like may be used. However, the configuration according to ninth embodiment is not limited to this configuration. In this case, the scheduler 105 does not notify the slot number to the scrambling code generator 112.

Eleventh embodiment

Next, an eleventh embodiment is described. In the eleventh embodiment, the terms of the "cell ID" and the "slot number" are removed from and an offset is added to the formula for calculating the initial value of the scrambling code.

Namely, in the eleventh embodiment, the slot number and the physical cell ID are removed from the initial value calculation formula. Further, to reduce the correlation similar to the above embodiments, as illustrated in the following formula (14), the offset term "CoMP_offset$_5$" is added.

$$c_{\text{init}} = n_{\text{RNTI}} \cdot 2^{14} + q \cdot 2^{13} + CoMP\_offset_5 \quad \cdot \cdot \cdot (1\,4)$$

By doing this, it may become possible to generate the scrambling code for CoMP having less correlation with the scrambling codes for other PDSCH and PMCH.

Further, in the eleventh embodiment, the constant term "q·2$^{13}$" may also be removed. In this case as well, to reduce the correlation similar to the above embodiments, as illustrated in the following formula (15), the offset term "CoMP_offset$_6$" is added.

$$c_{\text{init}} = n_{\text{RNTI}} \cdot 2^{14} + CoMP\_offset_6 \quad \cdot \cdot \cdot (1\,5)$$

Here, as an apparatus configuration of the base station according to the eleventh embodiment, the master base station 100-1D of FIG. 25 and the like may be used. However, the configuration according to the ninth embodiment is not limited to this configuration.

Twelfth embodiment

Next, a twelfth embodiment is described. In the twelfth embodiment, the offset is applied to the uplink CoMP as well. Namely, in the twelfth embodiment, the offset is further used in the uplink CoMP indicated in the sixth embodiment so that the generated scrambling code has less correlation with other scrambling codes. By doing this, the interferences may be reduced and accordingly the transmission characteristics may be improved.

Further, as example configurations of the base stations and the terminal, for example, the example configurations of the base stations and the terminal according to the sixth embodiment may be used. However, the configurations in the twelfth embodiment are not limited to those configurations. Example communication process in twelfth embodiment

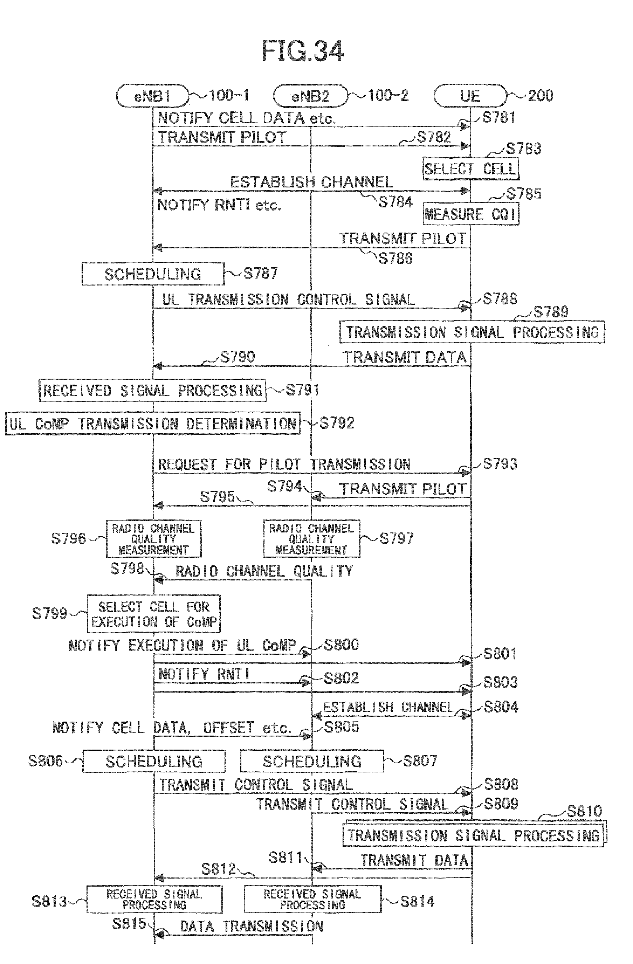

Next, an example communication process according to the twelfth embodiment is described. FIG. 34 is an example sequence diagram of an example communication process according to the twelfth embodiment. FIG. 34 illustrates an example communication process that determines whether the uplink CoMP (UL CoMP) transmission is performed by the master base station 100-1.

Further, in the following, a main difference from the example communication process according to the sixth embodiment is described. In FIG. 34, upon notice of the cell data (Cell) to the slave station (eNB2) 100-2, the master base station (eNB1) 100-1 also notifies the offset and the like (step S805).

The process of steps S781 through S815 excepting the above steps in FIG. 34 is substantially the same as the process in the above embodiments (e.g., the sixth embodiment). Therefore, the specific descriptions thereof are herein omitted.

Example communication process in twelfth embodiment (modified example 1)

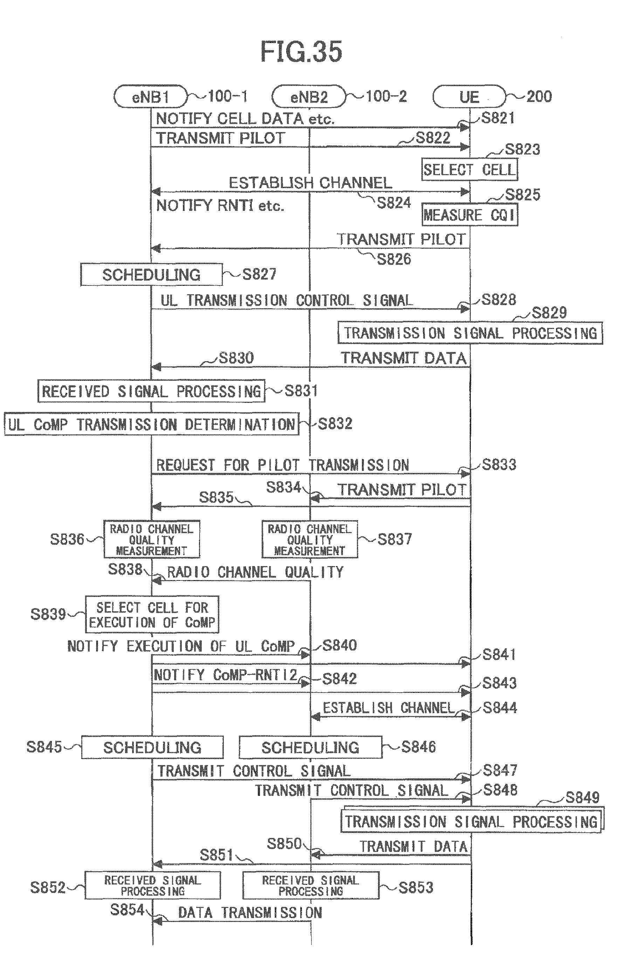

Next, another communication process according to the twelfth embodiment (modified example 1) is described. FIG. 35 is an example sequence diagram of an example communication process (modified example 1) according to the twelfth embodiment. In the example of FIG. 35, similar to the example of FIG. 34, the example communication process is illustrated that determines whether the uplink CoMP (UL CoMP) transmission is performed by the master base station 100-1.

Further, in the following, a main difference from the example communication process of FIG. 34 is described.

In the twelfth embodiment (modified example 1) of FIG. 34, the master base station 100-1 notifies the CoMP-RNTI including the offset (i.e., "CoMP-RNTI2") to the slave base station 100-2 and the terminal 200 (steps S842 and S843).

In the process of steps S821 through S854 excepting the above steps in FIG. 35 are substantially the same as the process in the above embodiments (e.g., the example communication process of FIG. 34). Therefore, the specific descriptions thereof are herein omitted.

By doing this, in the twelfth embodiment, by using the offset so that the scrambling code may be generated to have less correlation with other scrambling codes, the interferences may be reduced and accordingly, the transmission characteristics may be improved.

According to the above embodiments, for example, it may become possible to reduce the workloads of the processes to be performed by the terminal and the base stations. Further, according to the above embodiments, it may become possible to reduce the energy consumption in the terminal and the base stations. Further, according to the above embodiments, it may become possible to reduce an amount of data desired to calculate the initial value of the scrambling code in the following base station that is to perform the CoMP transmission.

Further, according to the above embodiments, it may become possible to reduce an amount of data desired to notify the calculation result of the initial value of the scrambling code in the base station and the terminal that are to perform the CoMP transmission.

Further, by storing a program that realizes the communication process described in the above embodiments into a recording medium, it may become possible to cause a computer to perform the communication process according to an embodiment of the present invention.

Further, the control process described above may be realized (performed) by causing the computer or a mobile terminal device to read the program stored in the recording medium after the program is stored in the recording medium.

Further, there are various types of recording medium, that may be used as the recording medium, including, for example, a recording medium to which data are optically, electronically, or magnetically stored such as a CD-ROM, a flexible disc, a magnetic optical disc or the like and a semiconductor memory to which data are electronically stored, the semiconductor memory including a Read-Only Memory (ROM), flash memory or the like.

Although details of the embodiments are described, it should be noted that the present invention is not limited to a specific embodiment. Namely, various modifications and changes may be applicable without departing from the scope of the claims of the present invention. Further, it is possible to include a combination having all or some of the embodiments.

**Claims**

**1.** A communication system, comprising:

a terminal apparatus; and
primary and secondary base station apparatuses each providing one or more cells,
wherein the primary base station apparatus includes

a transmission unit configured to transmit communication conditions to the secondary base station apparatus, the communication conditions being used for signal transmission and reception processing in a coordinated communication mode where the primary and secondary base station apparatuses perform radio communications with the terminal apparatus in coordination with each other, and
a radio communication unit configured to perform radio communications with the terminal apparatus using the communication conditions in the coordinated communication mode, and

wherein the secondary base station apparatus includes

a receiving unit configured to receive the communication conditions from the primary base station apparatus,
a transition unit configured to, when the communication conditions are received from the primary base station apparatus, transition into the coordinated communication mode, and
a radio communication unit configured to perform radio communications with the terminal apparatus using the communication conditions received from the primary base station apparatus in the coordinated communication mode.

2. The communication system according to claim 1,
wherein the communication conditions include identification data associated with the communications with the terminal apparatus, and
wherein, in radio communications performed in the primary and secondary base station apparatuses using the communication conditions, a scrambling code, which is acquired based on the identification data, is used for a signal processing performed on data in the radio communication data with the terminal apparatus.

3. The communication system according to claim 2,
wherein the communication conditions further include cell data which identify a cell that belongs to the primary base station apparatus and is used in the radio communications with the terminal apparatus, and
wherein, in acquiring the scrambling code, the secondary base station apparatus is configured to calculate the scrambling code by using the cell data and the identification data included in the communication conditions received from the primary base station apparatus.

4. The communication system according to claim 2 or 3,
wherein, in the coordinate communication mode, the primary and secondary base station apparatuses are configured to perform scrambling and descrambling processing by using a same scrambling code for respective data different from each other between the primary and secondary base station apparatuses.

5. The communication system according to any one of claims 1 through 4,

wherein the primary base station apparatus further includes

a transmission unit configured to transmit the communication conditions to the terminal apparatus which is to transition into the coordinated communication mode, the communication conditions having a same contents as those of the communication conditions to be transmitted to the secondary base station apparatus, and

wherein the terminal apparatus includes

a receiving unit configured to receive the communication conditions from the primary base station apparatus,
a transition unit configured to, when the communication conditions is received from the primary base station apparatus, transition into the coordinated communication mode to perform radio communications with the primary and secondary base station apparatuses, and
a radio communication unit configured to perform radio communications with the primary and secondary base station apparatuses using the communication conditions received from the primary base station apparatus in the coordinated communication mode.

**6.** A base station apparatus providing one or more cells and performing radio communications with a terminal apparatus, the base station apparatus comprising:

a transmission unit configured to, when the base station apparatus is to transition into a coordinated communication mode where the base station apparatus and another base station apparatus perform radio communications with the terminal apparatus in coordination with each other, transmit communication conditions to the other base station apparatus, the communication conditions being used for modulation and demodulation processes in the radio communications with the terminal apparatus, and
a communication unit configured to communicate with the terminal apparatus by using the communication conditions in the coordinated communication mode.

**7.** A base station apparatus providing one or more cells and performing radio communications with a terminal apparatus, the base station apparatus comprising:

a receiving unit configured to receive communication conditions from another base station apparatus, the communication conditions being used for a signal processing in the radio communications with the terminal apparatus,
a transition unit configured to, when the communication conditions is received from the other base station apparatus, transition into a coordinated communication mode where the base station apparatus and the other base station apparatus perform radio communications with the terminal apparatus in coordination with each other, and
a communication unit configured to communicate with the terminal apparatus by using the communication conditions received from the other base station apparatus in the coordinated communication mode.

**8.** A terminal apparatus performing radio communications with primary and secondary base station apparatuses each providing one or more cells, the terminal apparatus comprising:

a receiving unit configured to receive communication conditions from the primary base station apparatus, contents of the communication conditions being the same as those of communication conditions which are to be transmitted from the primary base station apparatus to the secondary base station apparatus,
a transition unit configured to, when the communication conditions is received from the primary base station apparatus, transition into a coordinated communication mode to perform radio communications with the primary and secondary base station apparatuses, and

a radio communication unit configured to perform radio communications with the primary and secondary base station apparatuses using the communication conditions received from the primary base station apparatus in the coordinated communication mode.

**9.** A method of performing radio communications between a terminal apparatus and primary and secondary base station apparatuses each of the base station apparatuses providing one or more cells, the method comprising:

transmitting, by the primary base station apparatus, communication conditions to the secondary base station apparatus, the communication conditions being used for modulation and demodulation processing in radio communications with the terminal apparatus when the primary base station apparatus is to transition into a coordinated communication mode where the primary and secondary base station apparatuses perform radio communications with the terminal apparatus in coordination with each other,
performing, by the primary base station apparatus, the radio communications with the terminal apparatus using the communication conditions in the coordinated communication mode;
receiving, by the secondary base station apparatus, the communication conditions from the primary base station apparatus;
transitioning, by the secondary base station apparatus, into the coordinated communication mode where the second and primary base station apparatuses perform radio communications with the terminal apparatus in coordination with each other when the communication conditions are received from the primary base station apparatus; and
performing, by the secondary base station apparatus, radio communications with the terminal apparatus using the communication conditions received from the primary base station apparatus in the coordinated communication mode.

# FIG.1

# FIG.2

100-1A

RECEIVED DATA ←

103 DEMODU-LATOR/DECODER

102 RADIO RECEIVER

101

108 CONNECTION REQUEST SIGNAL EXTRACTOR

106 CoMP COMMUNICATION REQUEST SIGNAL EXTRACTOR

111 CoMP-RNTI SETTER

RADIO CHANNEL QUALITY DATA FROM NEIGHBOURING BASE STATION →

107 CoMP COMMUNICATION EXECUTION DETERMINATOR AND CONTROLLER

104 RADIO CHANNEL QUALITY DATA EXTRACTOR

CoMP EXECUTION NOTICE ← TO CoMP EXECUTING BASE STATION

110 RNTI SETTER

109 RADIO CHANNEL CONTROLLER

CoMP EXECUTION NOTICE

USING FREQUENCY

105 SCHEDULER

CoMP CONTROL SIGNAL ← (PRECODING DATA) TO CoMP EXECUTING BASE STATION

USING FREQUENCY PRECODING DATA

CELL NUMBER CoMP-RNTI

112 SCRAMBLING CODE GENERATOR

CELL NUMBER CoMP-RNTI

TRANSMISSION SLOT NUMBER

CELL DATA TO ← CoMP EXECUTING BASE STATION

SLOT NUMBER

113 SYSTEM INFORMATION GENERATOR

115 CONTROL SIGNAL GENERATOR

TRANSMISSION DATA →

114 TRANSMIS-SION DATA BUFFER

116 ENCODER/MODULATOR

117 RADIO TRANSMIT-TER

EP 2 693 817 A1

31

FIG.3

100-2A

RECEIVED DATA ←

103
DEMODU-
LATOR/
DECODER

102
RADIO
RECEIVER

101

106
CoMP
COMMUNICATION
REQUEST SIGNAL
EXTRACTOR

RADIO CHANNEL QUALITY
DATA FROM NEIGHBOURING
BASE STATION ←

104
RADIO CHANNEL
QUALITY DATA
EXTRACTOR

107
CoMP
COMMUNICATION
EXECUTION
DETERMINATOR
AND CONTROLLER

CoMP EXECUTION NOTICE
FROM CoMP EXECUTING
MASTER BASE STATION →

CoMP EXECUTION NOTICE

USING FREQUENCY
PRECODING DATA

105
SCHEDULER

CoMP CONTROL SIGNAL
(PRECODING DATA) TO CoMP
EXECUTING BASE STATION

CELL DATA FROM
CoMP EXECUTING
MASTER BASE STATION

CELL NUMBER
CoMP-RNTI

TRANSMISSION
SLOT NUMBER

SCRAMBLING
CODE
GENERATOR

112

CONTROL
SIGNAL
GENERATOR
115

TRANSMISSION DATA →

TRANSMIS-
SION DATA
BUFFER
114

ENCODER/
MODULATOR
116

RADIO
TRANSMIT
-TER
117

EP 2 693 817 A1

FIG.4

200A

202 RADIO RECEIVER

203 DEMODU-LATOR/DECODER

RECEIVED DATA

204 RADIO CHANNEL QUALITY MEASURER AND CALCULATOR

206 CELL DATA EXTRACTOR

207 CoMP-RNTI EXTRACTOR

209 RECEIVED CONTROL SIGNAL EXTRACTOR

211 RECEIVED POWER MEASURER

201

210 TERMINAL SETTING CONTROLLER

212 CHANNEL CONNECTION CONTROLLER

208 SCRAMBLING CODE GENERATOR

213 CONNECTION REQUEST SIGNAL GENERATOR

205 RADIO CHANNEL QUALITY DATA GENERATOR

215 RADIO TRANSMIT-TER

214 ENCODER/MODULATOR

TRANSMISSION DATA

EP 2 693 817 A1

33

## FIG.5

200B

EP 2 693 817 A1

# FIG.6

112-1

MSB                                                                LSB

112-5

$x_1(i)$

112-3

112-4

$x_2(i)$

112-2

EP 2 693 817 A1

# FIG.7

# FIG.8

# FIG.9

# FIG.10

# FIG.11

| ( eNB1 )~100-1 | ( eNB2 )~100-2 | ( UE )~200 |

NOTIFY CELL DATA etc. →S161
TRANSMIT PILOT →S162 S163
SELECT CELL
ESTABLISH CHANNEL ←→ S165
NOTIFY RNTI etc. S164
MEASURE CQI
CQI
←S166
SCHEDULING ~S167
TRANSMISSION SIGNAL PROCESSING ~S168
TRANSMIT CONTROL SIGNAL →S169
TRANSMIT DATA →S170 S171
RECEIVED SIGNAL PROCESSING
NOTIFY CELL DATA etc. →S172
TRANSMIT PILOT →S173
SELECT CELL ~S174
TRANSMIT PILOT S175 →S176
TRANSMIT PILOT S176 S177
MEASURE CQI
S178 CQI
S179 ←
S181 ←
S180
CoMP TRANSMISSION DETERMINATION
REQUEST FOR PERFORMING
CoMP TRANSMISSION
S183 ←
S182
NOTIFY EXECUTION OF CoMP TRANSMISSION S184 S185
NOTIFY CoMP-RNTI S186 S187
ESTABLISH CHANNEL S188
NOTIFY OTHER CELL DATA etc. S189
TRANSFER DATA S190
SCHEDULING ~S191
NOTIFY TRANSMISSION CONTROL DATA S192
S193~ TRANSMISSION SIGNAL PROCESSING | TRANSMISSION SIGNAL PROCESSING ~S194
TRANSMIT CONTROL SIGNAL →S195
TRANSMIT DATA →S196
TRANSMIT DATA →S197
RECEIVED SIGNAL PROCESSING ~S198

# FIG.12

eNB1 ~100-1    eNB2 ~100-2    UE ~200

NOTIFY CELL DATA etc. ─→ S201
TRANSMIT PILOT ─→ S202  S203
                                    SELECT CELL
ESTABLISH CHANNEL ←────────→
NOTIFY RNTI etc. ─→        S204  S205
                                    MEASURE CQI
                        CQI
←──────────────                S206
SCHEDULING ~S207
TRANSMISSION SIGNAL PROCESSING ─ S208
TRANSMIT CONTROL SIGNAL ─→ S209
TRANSMIT DATA ─→ S210  S211
                        RECEIVED SIGNAL PROCESSING
NOTIFY CELL DATA etc. ─→ S212
TRANSMIT PILOT ─→ S213
                        SELECT CELL ~S214
TRANSMIT PILOT ─→ S215
TRANSMIT PILOT ─→ S216  S217
                        MEASURE CQI
                S218       CQI
S219 ←───────────  ←─────────
S221 ←─────  ←─── S220
CoMP TRANSMISSION DETERMINATION
                        REQUEST FOR PERFORMING
                S223       CoMP TRANSMISSION
←─────                          S222
NOTIFY EXECUTION OF CoMP TRANSMISSION ─→ S224  S225
                                    ─────────→
SYNCHRONIZE BETWEEN BASE STATIONS ~S226
NOTIFY CoMP-RNTI ─→ S227      S228
ESTABLISH CHANNEL ←────────→ S229
SCHEDULING ~S230
NOTIFY OTHER CELL DATA etc. ─→ S231
TRANSFER DATA ─→ S232
NOTIFY TRANSMISSION CONTROL DATA ─→ S233
S234 ~ TRANSMISSION SIGNAL PROCESSING    TRANSMISSION SIGNAL PROCESSING ~S235
TRANSMIT CONTROL SIGNAL ─→ S236
TRANSMIT DATA ─→ S237
TRANSMIT DATA ─→ S238
                        RECEIVED SIGNAL PROCESSING ~S239

# FIG.13

MME 300

MOBILITY MANAGER 301

CoMP CONTROLLER 302

13

100-2

eNB2

PDSCH

PDSCH

PDSCH

eNB1

100-1

200

# FIG.14

100-1B

RECEIVED DATA

REQUEST FOR CoMP-RNTI

to/from MME

NOTIFY CoMP-RNTI

RADIO CHANNEL QUALITY DATA FROM NEIGHBOURING BASE STATION

CoMP EXECUTION NOTICE TO BASE STATION TO CoMP PERFORMING BASE STATION

CoMP CONTROL SIGNAL (PRECODING DATA) TO CoMP EXECUTING BASE STATION

CELL DATA TO CoMP EXECUTING BASE STATION

TRANSMISSION DATA

103 DEMODU-LATOR/DECODER

102 RADIO RECEIVER

101

108 CONNECTION REQUEST SIGNAL EXTRACTOR

106 CoMP COMMUNICATION REQUEST SIGNAL EXTRACTOR

107 CoMP COMMUNICATION EXECUTION DETERMINATOR AND CONTROLLER

104 RADIO CHANNEL QUALITY DATA EXTRACTOR

110 RNTI SETTER

109 RADIO CHANNEL CONTROLLER

CoMP EXECUTION NOTICE

USING FREQUENCY

105 SCHEDULER

USING FREQUENCY PRECODING DATA

CELL NUMBER CoMP-RNTI

112 SCRAMBLING CODE GENERATOR

CELL NUMBER CoMP-RNTI

SLOT NUMBER

TRANSMISSION SLOT NUMBER

113 SYSTEM INFORMATION GENERATOR

115 CONTROL SIGNAL GENERATOR

114 TRANSMIS-SION DATA BUFFER

116 ENCODER/MODULATOR

117 RADIO TRANSMIT-TER

EP 2 693 817 A1

43

# FIG.15

# FIG.16

# FIG.17

MME 300     eNB1 100-1     eNB2 100-2     UE 200

NOTIFY CELL DATA etc. S320

TRANSMIT PILOT S321

S322 SELECT CELL

ESTABLISH CHANNEL S323

NOTIFY RNTI etc. S324 MEASURE CQI

CQI S325

SCHEDULING S326

TRANSMISSION SIGNAL PROCESSING S327

TRANSMIT CONTROL SIGNAL S328

TRANSMIT DATA S329 S330

RECEIVED SIGNAL PROCESSING

NOTIFY CELL DATA etc. S331

TRANSMIT PILOT S332

S333 SELECT CELL

REQUEST FOR CoMP-RNTI     REQUEST FOR CoMP TRANSMISSION

S336     S335     S334

SELECT/ALLOCATE CoMP-RNTI

NOTIFY CoMP-RNTI S337 S338

NOTIFY CoMP-RNTI S339

NOTIFY EXECUTION OF CoMP TRANSMISSION S340 S341

ESTABLISH CHANNEL S342

TRANSMIT PILOT S343

TRANSMIT PILOT S344

S345 MEASURE CQI

S346 CQI

S347

S348 SCHEDULING     SCHEDULING S349

S350 TRANSMISSION SIGNAL PROCESSING     TRANSMISSION SIGNAL PROCESSING S351

TRANSMIT CONTROL SIGNAL S352

TRANSMIT DATA S353

TRANSMIT CONTROL SIGNAL S354

TRANSMIT DATA S355

S356 RECEIVED SIGNAL PROCESSING

46

# FIG.18

**FIG.19**

100-1C

CELL DATA TO CoMP EXECUTING BASE STATION

TRANSMISSION DATA

RECEIVED DATA

RADIO CHANNEL QUALITY DATA FROM NEIGHBOURING BASE STATION

CoMP EXECUTION NOTICE TO BASE STATION TO CoMP EXECUTING BASE STATION

CoMP CONTROL SIGNAL (PRECODING DATA) TO CoMP EXECUTING BASE STATION

108 CONNECTION REQUEST SIGNAL EXTRACTOR

106 CoMP COMMUNICATION REQUEST SIGNAL EXTRACTOR

107 CoMP COMMUNICATION EXECUTION DETERMINATOR AND CONTROLLER

118 RADIO CHANNEL QUALITY MEASURER AND CALCULATOR

109 RADIO CHANNEL CONTROLLER

CoMP EXECUTION NOTICE

USING FREQUENCY

105 SCHEDULER

USING FREQUENCY PRECODING DATA

CELL NUMBER CoMP-RNTI

TRANSMISSION SLOT NUMBER

113 SYSTEM INFORMATION GENERATOR

TRANSMISSION SLOT NUMBER

112 SCRAMBLING CODE GENERATOR

114 TRANSMISSION DATA BUFFER

115 CONTROL SIGNAL GENERATOR

103 DEMODULATOR/ DECODER

102 RADIO RECEIVER

101

116 ENCODER/ MODULATOR

117 RADIO TRANSMITTER

EP 2 693 817 A1

# FIG.20

100-2B

RECEIVED DATA

RADIO CHANNEL QUALITY
DATA FROM NEIGHBOURING
BASE STATION

CoMP EXECUTION NOTICE
FROM CoMP EXECUTING
MASTER BASE STATION

CoMP EXECUTION NOTICE

CoMP CONTROL SIGNAL
(PRECODING DATA) TO CoMP
EXECUTING BASE STATION

USING FREQUENCY
PRECODING DATA

CELL DATA FROM
CoMP EXECUTING
MASTER BASE STATION

CELL NUMBER
CoMP-RNTI

TRANSMISSION
SLOT NUMBER

TRANSMISSION DATA

103 DEMODU-LATOR/DECODER

102 RADIO RECEIVER

106 CoMP COMMUNICATION REQUEST SIGNAL EXTRACTOR

118 RADIO CHANNEL QUALITY MEASURER AND CALCULATOR

107 CoMP COMMUNICATION EXECUTION DETERMINATOR AND CONTROLLER

105 SCHEDULER

112 SCRAMBLING CODE GENERATOR

115 CONTROL SIGNAL GENERATOR

114 TRANSMIS-SION DATA BUFFER

116 ENCODER/MODULATOR

117 RADIO TRANSMIT-TER

101

EP 2 693 817 A1

FIG.21

EP 2 693 817 A1

EP 2 693 817 A1

# FIG.22

51

# FIG.23

eNB1 ~100-1    eNB2 ~100-2    UE ~200

NOTIFY CELL DATA etc. ────→ S441
TRANSMIT PILOT ──────→ S442
                              S443 SELECT CELL
←──── ESTABLISH CHANNEL ────→ S445
NOTIFY RNTI etc. S444    MEASURE CQI
←──── TRANSMIT PILOT
          S446
SCHEDULING ~S447
UL TRANSMISSION CONTROL SIGNAL ─→S448
                              S449 TRANSMISSION SIGNAL PROCESSING
←─S450 TRANSMIT DATA
RECEIVED SIGNAL PROCESSING ~S451
                              S452 UL CoMP TRANSMISSION DETERMINATION
S453 ←── REQUEST FOR UL CoMP TRANSMISSION
REQUEST FOR PILOT TRANSMISSION ~S454
     S456     S455 ← TRANSMIT PILOT
S457 RADIO CHANNEL QUALITY MEASUREMENT   RADIO CHANNEL QUALITY MEASUREMENT ~S458
S459 ← RADIO CHANNEL QUALITY
S460 SELECT CELL FOR EXECUTION OF CoMP
NOTIFY EXECUTION OF UL CoMP ─→S461 →S462
NOTIFY CoMP-RNTI ─→S463 →S464
←── ESTABLISH CHANNEL ─→S465
NOTIFY CELL DATA etc. ─→S466
S467 SCHEDULING    SCHEDULING ~S468
UL TRANSMISSION CONTROL SIGNAL →S469
UL TRANSMISSION CONTROL SIGNAL →S470
                              S471 TRANSMISSION SIGNAL PROCESSING
     S473    S472 ← TRANSMIT DATA
S474 RECEIVED SIGNAL PROCESSING   RECEIVED SIGNAL PROCESSING ~S475
S476 ← DATA TRANSMISSION

# FIG.24

# FIG.25

100-1D

RECEIVED DATA ← ...

RADIO CHANNEL QUALITY
DATA FROM NEIGHBOURING
BASE STATION

CoMP CONTROL SIGNAL
(PRECODING DATA)

TRANSMISSION DATA →

Blocks shown:
- 103 DEMODULATOR/DECODER
- 102 RADIO RECEIVER
- 101 (antenna)
- 108 CONNECTION REQUEST SIGNAL EXTRACTOR
- 119 CoMP COMMUNICATION CONTROLLER
- 104 RADIO CHANNEL QUALITY DATA EXTRACTOR
- CoMP EXECUTION NOTICE
- 110 RNTI SETTER
- 109 RADIO CHANNEL CONTROLLER
- 105 SCHEDULER
- SLOT NUMBER
- 120 OFFSET SETTER/STORAGE
- 113 SYSTEM INFORMATION GENERATOR
- 112 SCRAMBLING CODE GENERATOR
- 115 CONTROL SIGNAL GENERATOR
- 114 TRANSMISSION DATA BUFFER
- 116 ENCODER/MODULATOR
- 117 RADIO TRANSMITTER

EP 2 693 817 A1

FIG.26

100-1E

RECEIVED DATA

RADIO CHANNEL QUALITY DATA FROM NEIGHBOURING BASE STATION

CoMP-RNTI2 etc.

CoMP CONTROL SIGNAL (PRECODING DATA)

TRANSMISSION DATA

103 DEMODU-LATOR/DECODER
102 RADIO RECEIVER
101
108 CONNECTION REQUEST SIGNAL EXTRACTOR
119 CoMP COMMU-NICATION CONTROLLER
104 RADIO CHANNEL QUALITY DATA EXTRACTOR
110 RNTI SETTER
109 RADIO CHANNEL CONTROLLER
CoMP EXECUTION NOTICE
105 SCHEDULER
SLOT NUMBER
113 SYSTEM INFORMATION GENERATOR
CoMP-RNTI2 etc.
112 SCRAMBLING CODE GENERATOR
115 CONTROL SIGNAL GENERATOR
114 TRANSMIS-SION DATA BUFFER
116 ENCODER/MODULATOR
117 RADIO TRANSMITTER

EP 2 693 817 A1

# FIG.27

200D

# FIG.28

EP 2 693 817 A1

# FIG.29

58

# FIG.30

```
  ( eNB1 )~100-1   ( eNB2 )~100-2      ( UE )~200
```

NOTIFY CELL DATA etc. ─────────────►~S611

TRANSMIT PILOT ────────~S612──────►

~S613 SELECT CELL

◄──────── ESTABLISH CHANNEL ────────►

NOTIFY RNTI etc. ~S614 ─────────► ~S615 MEASURE CQI

◄──────────── CQI ──────────── ~S616

SCHEDULING ~S617

TRANSMISSION SIGNAL PROCESSING ~S618

TRANSMIT CONTROL SIGNAL ─────────►~S619

TRANSMIT DATA ─────~S620──────►

~S621 RECEIVED SIGNAL PROCESSING

CoMP TRANSMISSION DETERMINATION ~S622

NOTIFY CELL DATA etc. ◄~S623

TRANSMIT PILOT ◄~S624

SELECT CELL ~S625

◄──── REQUEST FOR EXECUTION OF CoMP TRANSMISSION ──── ~S626

NOTIFY EXECUTION OF CoMP TRANSMISSION ~S627 ────~S628────►

NOTIFY CoMP-RNTI2 ◄~S629 ~S630

◄──── ESTABLISH CHANNEL ~S631

TRANSMIT PILOT ────────►~S632

TRANSMIT PILOT ◄~S633 ~S634

MEASURE CQI

S635 ◄──── CQI

◄──── ~S636

S637~ SCHEDULING          SCHEDULING ~S638

S639~ TRANSMISSION SIGNAL PROCESSING    TRANSMISSION SIGNAL PROCESSING ~S640

TRANSMIT CONTROL SIGNAL ─────────►~S641

TRANSMIT DATA ─────────►~S642

TRANSMIT CONTROL SIGNAL ◄~S643

TRANSMIT DATA ◄~S644

RECEIVED SIGNAL PROCESSING ~S645

# FIG.31

# FIG.32

```
( eNB1 )～100-1    ( eNB2 )～100-2    ( UE )～200
```

NOTIFY CELL DATA etc. ────────► S691
TRANSMIT PILOT ──────── S692 ────►
                                  S693
                          ◄SELECT CELL
ESTABLISH CHANNEL ◄──────────────►
NOTIFY RNTI etc. ─── S694 ──► S695
                          MEASURE CQI
                              CQI
◄──────────────── S696
┌──────────────────┐
│ SCHEDULING │～S697
└──────────────────┘
┌────────────────────────────────────────┐
│ TRANSMISSION SIGNAL PROCESSING │～S698
└────────────────────────────────────────┘
TRANSMIT CONTROL SIGNAL ────────► S699
TRANSMIT DATA ─── S700 ────►
                             S701
              RECEIVED SIGNAL PROCESSING
              CoMP TRANSMISSION DETERMINATION
                                  ～S702
NOTIFY CELL DATA etc. ── S703
TRANSMIT PILOT ── S704 ────►
                   SELECT CELL ～S705
REQUEST FOR EXECUTION OF CoMP TRANSMISSION
◄──────────────────────────────────── S706
NOTIFY EXECUTION OF CoMP TRANSMISSION ── S707 ── S708 ──►
NOTIFY RNTI ── S709 ──► S710
              ESTABLISH CHANNEL ◄── S711
NOTIFY OFFSET etc. ── S712 ──► S713
TRANSMIT PILOT ── S714 ──►
              TRANSMIT PILOT ── S715 ── S716
                          MEASURE CQI
                  S717
◄── S718        CQI
S719～ SCHEDULING    SCHEDULING ～S720
S721～ TRANSMISSION    TRANSMISSION ～S722
      SIGNAL PROCESSING  SIGNAL PROCESSING
TRANSMIT CONTROL SIGNAL ────────► S723
TRANSMIT DATA ──────────► S724
              TRANSMIT CONTROL SIGNAL ── S725
              TRANSMIT DATA ── S726
                          RECEIVED SIGNAL ～S727
                          PROCESSING
```

# FIG.33

# FIG.34

eNB1 ~100-1    eNB2 ~100-2    UE ~200

NOTIFY CELL DATA etc. ~S781

TRANSMIT PILOT ~S782

SELECT CELL ~S783

ESTABLISH CHANNEL

NOTIFY RNTI etc. ~S784

MEASURE CQI ~S785

TRANSMIT PILOT
~S786

SCHEDULING ~S787

UL TRANSMISSION CONTROL SIGNAL ~S788

TRANSMISSION SIGNAL PROCESSING ~S789

~S790 TRANSMIT DATA

RECEIVED SIGNAL PROCESSING ~S791

UL CoMP TRANSMISSION DETERMINATION ~S792

REQUEST FOR PILOT TRANSMISSION ~S793

S795~ S794~ TRANSMIT PILOT

S796~ RADIO CHANNEL QUALITY MEASUREMENT    RADIO CHANNEL QUALITY MEASUREMENT ~S797

S798~ RADIO CHANNEL QUALITY

S799~ SELECT CELL FOR EXECUTION OF CoMP

NOTIFY EXECUTION OF UL CoMP ~S800    ~S801

NOTIFY RNTI ~S802    ~S803

ESTABLISH CHANNEL ~S804

NOTIFY CELL DATA, OFFSET etc. ~S805

S806~ SCHEDULING    SCHEDULING ~S807

TRANSMIT CONTROL SIGNAL ~S808

TRANSMIT CONTROL SIGNAL ~S809

TRANSMISSION SIGNAL PROCESSING ~S810

S812~ S811~ TRANSMIT DATA

S813~ RECEIVED SIGNAL PROCESSING    RECEIVED SIGNAL PROCESSING ~S814

S815~ DATA TRANSMISSION

# FIG.35

```
   ( eNB1 )~100-1      ( eNB2 )~100-2      ( UE )~200
```

NOTIFY CELL DATA etc. ~S821
TRANSMIT PILOT ~S822
~S823
SELECT CELL
ESTABLISH CHANNEL
NOTIFY RNTI etc. ~S824 ~S825
MEASURE CQI
TRANSMIT PILOT
~S826

SCHEDULING ~S827
UL TRANSMISSION CONTROL SIGNAL ~S828
~S829
TRANSMISSION SIGNAL PROCESSING
~S830 TRANSMIT DATA

RECEIVED SIGNAL PROCESSING ~S831
UL CoMP TRANSMISSION DETERMINATION ~S832

REQUEST FOR PILOT TRANSMISSION ~S833
S834 TRANSMIT PILOT
S835

S836~ | RADIO CHANNEL QUALITY MEASUREMENT |   | RADIO CHANNEL QUALITY MEASUREMENT | ~S837
S838 RADIO CHANNEL QUALITY

S839~ | SELECT CELL FOR EXECUTION OF CoMP |
NOTIFY EXECUTION OF UL CoMP ~S840
~S841
NOTIFY CoMP-RNTI2 ~S842
~S843
ESTABLISH CHANNEL ~S844

S845~ SCHEDULING     SCHEDULING ~S846
TRANSMIT CONTROL SIGNAL ~S847
TRANSMIT CONTROL SIGNAL ~S848
~S849
TRANSMISSION SIGNAL PROCESSING
S850 TRANSMIT DATA
S851

S852~ | RECEIVED SIGNAL PROCESSING |   | RECEIVED SIGNAL PROCESSING | ~S853
S854 DATA TRANSMISSION

## INTERNATIONAL SEARCH REPORT

| International application No. |
| --- |
| PCT/JP2011/058355 |

A. CLASSIFICATION OF SUBJECT MATTER
*H04W72/04*(2009.01)i

According to International Patent Classification (IPC) or to both national classification and IPC

B. FIELDS SEARCHED

Minimum documentation searched (classification system followed by classification symbols)
H04W72/04

Documentation searched other than minimum documentation to the extent that such documents are included in the fields searched
Jitsuyo Shinan Koho          1922-1996    Jitsuyo Shinan Toroku Koho    1996-2011
Kokai Jitsuyo Shinan Koho    1971-2011    Toroku Jitsuyo Shinan Koho    1994-2011

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | WO 2010/146617 A1  (Fujitsu Ltd.),<br>23 December 2010 (23.12.2010),<br>entire text; all drawings<br>(Family: none) | 1,5-9<br>2-4 |
| X<br>Y | WO 2011/001458 A1  (Fujitsu Ltd.),<br>06 January 2011 (06.01.2011),<br>entire text; all drawings<br>(Family: none) | 1,5-9<br>2-4 |
| Y | WO 2010/125738 A1  (Mitsubishi Electric Corp.),<br>04 November 2010 (04.11.2010),<br>paragraph [0171]; fig. 30<br>(Family: none) | 2-4 |

☐ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 16 May, 2011 (16.05.11) | 24 May, 2011 (24.05.11) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2006311475 A
- JP 2008092379 A
- JP 2010146617 A
- JP 2011001458 A
- JP 2004531945 A
- JP 2009516936 A

### Non-patent literature cited in the description

- Feasibility study for further Advancements for E-UTRA (LTE-Advanced) (Release 9. *TR36.912 V9.3.0*
- Further Advancement for E-UTRA Physical Layer Aspects (Release 9. *TR36.814 V9.0.0*
- Further Advancement for E-UTRA Physical Layer Aspects (Release 9. *TR36.814 V 9.0.0*
- Further Advancements for E-UTRA Physical Layer Aspects (Release 9. *TR36.814 V9.0.0*
- Physical Channel and Modulation (Release 9. *TS36.211 V9.1.0*